# EUROPEAN PATENT APPLICATION

(11) **EP 2 258 569 A2**
(43) Date of publication of application: **08.12.2010**
(21) Application number: 10180052.2
(22) Date of filing: 03.04.2007
(51) Int. Cl.: B60G 3/20, B60K 1/02, B60K 1/04, B60K 7/00, B60K 17/02, B60K 17/04, B62D 21/11, F16D 27/00, B60K 6/44, B60W 30/18

(54) **Vehicle power unit designed as retrofittable axle comprising electric motors with a connecting clutch**

(30) Priority: 03.04.2006 US 788041 P; 21.08.2006 US 823043 P
(62) Divisional of application: 07760031.0
(71) Applicant: BluWav Systems, LLC, Rochester Hills MI 48309 (US)
(72) Inventor: The designation of the inventor has not yet been filed
(74) Representative: HOFFMANN EITLE

(57) **Abstract**

The invention relates to a motive power device for a vehicle, comprising:
two electric motors (M1;M2) with a support configured to support the two electric motors, each motor (M1;M2) driving a wheel mount and a clutch (EMC) connected between the two motors (M1;M2) to drive torque between them. The motors may be supported inside the vehicle and connected to the wheel mounts using drive shafts (S1,S2).

## Description

### Priority Data and Incorporation by Reference

This application claims priority to U.S. Provisional Patent Application Serial No. 60/788,041 filed April 3, 2006, and U.S. Provisional Patent Application Serial No. 60/823,043 filed August 21, 2006, which are incorporated herein by reference in their entirety.

### Technical Field

An electrically powered system for propelling a vehicle is described. Particular features suited for a land vehicle that works as a hybrid propulsion system in concert with a combustion engine are described.

### Background Art

Many types of vehicles are known to be suitable for enhancing the ability to traverse land. Examples of known types of land vehicles include automobiles (e.g., cars, trucks, vans, snowmobiles, carts, and other types of vehicles) There are basic variations of vehicle architectures from the standpoint of their drive systems. Drive systems typically include rear-wheel drive, front-wheel drive, and four-wheel drive configurations. Conventional engines include Otto-cycle (spark ignition) and Diesel engines in various cylinder and non-piston configurations (e.g., rotary) with longitudinal and transverse orientations. Battery-electric, hybrid electric, and hydraulic hybrid configurations are known.

The arrangement of the wheels on a vehicle is commonly in pairs, i.e., one of each pair is disposed on an opposite side of the vehicle's longitudinal axis (longitudinal co-aligned with the straight-ahead direction of travel of the vehicle), and may include single or plural pairs of wheels proximate the front end of the vehicle, and single or plural pairs of wheels proximate the rear end of the vehicle. However, a vehicle may alternatively include a single wheel at one of the front or rear ends of the vehicle, with the other end having a pair of wheels. The drive train, which may include speed change gearing, differential gearing, transfer case gearing, drive shaft(s), constant velocity joints, and any other components that support the generation of traction, commonly transmits torque from the propulsion system(s) to either the wheels at the front end of the vehicle (i.e., front-wheel-drive or "FWD"), the wheels at the rear end of the vehicle (i.e., rear-wheel-drive or "RWD"), or to all of the land engaging wheels (i.e., all-wheel-drive or "AWD").

Among hybrids, it is known to drive one set of wheels with an internal combustion engine and one set of wheels with an electric motor in a so-called through-the-road parallel hybrid configuration.

Presently, one of the most common architectures offered by vehicle manufacturers includes FWD with an internal combustion engine mounted transversely at the front of the vehicle. Conventionally, if the manufacturer also wishes to offer a similar vehicle with AWD, it may be desirable to add: 1) a power take-off unit (PTU) to redirect a portion of the available engine torque to the pair of wheels at the rear of the vehicle; 2) a drive shaft to convey the portion of the engine torque from the PTU to the rear wheels, 3) an additional differential gearing unit disposed between the rear wheels, and 4) two additional half-shafts to separately convey the engine torque from the additional differential gearing unit to each of the rear wheels.

Conversely, another common architecture offered by vehicle manufacturers incudes RWD with an internal combustion engine mounted longitudinally at the front of the vehicle. Conventionally, if the manufacturer also wishes to offer a similar vehicle with AWD, the known options include: 1) a transfer case to redirect a portion of the available engine torque to the pair of wheels at the front of the vehicle; 2) a drive shaft to convey the portion of the engine torque from the transfer case to the front wheels, 3) an additional differential gearing unit disposed between the front wheels, and 4) two additional half-shafts or an axle assembly to separately convey the engine torque from the additional differential gearing unit to each of the front wheels.

Patent publication US20070034428 for "Hybrid electric vehicle powertrain with torque transfer case" shows a torque transfer case for a hybrid vehicle powertrain with engine and electric power sources. The electric power source, consisting of an electric motor and a battery, distributes driving power to front and rear traction wheel and axle assemblies provide four-wheel drive and regenerative braking. The electric power source is also used for engine cranking and battery charging.

Patent publication WO200717719 for "Hybrid traction system" shows a series hybrid traction system with an internal combustion engine with first and second electric machines and first and second transmissions. A restraining mechanism enables mechanical power to be transmitted to the wheels of the vehicle only by the internal combustion engine through the first transmission and the second transmission means.

Patent publication WO200717043 for "Drive train for a motor vehicle and method for operating a drive train" shows a drive train for a motor vehicle with a serial hybrid drive. An internal combustion engine output shaft is connected to a first electrical machine while a second electrical machine is mechanically connected to a driven wheel. An electrical energy accumulator to which electrical energy can be supplied by the first and second electrical machine provides electrical energy to the first and the second electrical machines. A control unit distributes power between the electrical energy accumulator and the first electrical machine,

Patent publication US20070023211 for "Auxiliary electric drive assembly" shows an auxiliary electric drive with an induction motor, planetary speed reduction gearing and a differential. The differential may be either active or passive. The auxiliary drive system is a front axle in a rear wheel drive vehicle and the rear axle in a front wheel drive vehicle. The configuration eliminates components of a conventional four wheel drive system.

Patent publication EP1736346 for "Driving device for hybrid vehicle, and hybrid vehicle" shows a device for a hybrid vehicle with an engine whose power is split into a first part to drive a wheel and a second part to generate electricity. A pressure reduction device in the engine reduces compression in the cylinders of the engine which occurs due to cranking the engine. A control device governs the pressure reduction device when starting up the engine, to reduce the compression when the engine is started.

Patent publication JP2006264463 for "Drive of hybrid vehicle" shows a hybrid drive in which an engine and a motor generator are provided. A transmission case on a rear side of the vehicle and a speed change mechanism connected to a rear end of a crank shaft are provided. A motor case is located on a front end of the vehicle and a rotor is connected to a front end of the crank shaft. The structure permits the size of the motor generator to be increased without the floor tunnel restricting the outside diameter of the motor generator. The shape of a rear part of the drive can conform to that of an existing power unit so that the drive can be mounted without substantially changing an existing vehicle body structure.

Patent publication EP1707428 for "Electric motor driving system, electric four-wheel drive vehicle, and hybrid vehicle" shows an electric four-wheel drive vehicle that has an internal combustion engine, a generator that outputs DC electrical power and an inverter that converts the DC electrical power to AC which drives an electric motor.

Patent publication EP1698506 for "Driving unit for a hybrid vehicle" shows a drive connected to an internal combustion engine which has a starter-generator. The drive unit has an output shaft that drives the wheels of a vehicle. A centrifugal clutch couples the internal combustion engine with the starter-generator. A method for controlling drive unit is disclosed.

Patent publication CA2548815 for "Hybrid-vehicle drive system and operation method with a transmission" shows a hybrid-vehicle drive method and system that includes an internal combustion engine with two electric motors. A first electric motor/generator is connected to the output shaft of the internal combustion engine and a wheel drive shaft is connected to the output shaft of the internal combustion engine. The second electric motor/generator is connected to the wheel drive shaft which drives the wheels.

Patent publication JP2006009657 for "Hybrid driving device" shows a device capable of suppressing the driving force change of a vehicle during the shift stage of a transmission. The device has a first motor and a second motor which supply motive force to the vehicle's wheels. A control mechanism suppresses changes in driving force by changing the torque of the first and second motors.

Patent publication US20050107198 for "Hybrid powertrain" shows a hybrid system with an engine driving a transmission. A gear transfer mechanism is connected between the transmission and the vehicle drive wheels. An electric power unit which includes a motor/generator is drivingly connected with the gear transfer mechanism in parallel power flow relation with the output power flow from the transmission.

Patent US5,713,427 for "Hybrid drive in a motor vehicle" shows a modular unit including an internal combustion engine and an electric generator/motor. The housing of the generator/motor is permanently connected to the engine housing, and the rotor is coaxially and connected to the crankshaft. The modular unit has an elastically deformable torque transmission plate which is permanently connected by a flange to the driven end of the crankshaft and permanently connected on the side to the rotor so that the rotor is rotationally mounted in the generator housing.

Patent publication WO200452672 for "Power system for dual-motor hybrid vehicle" shows a power system, for dual-motor-generators hybrid electric vehicle, that includes an engine, motor-generators, a clutch, a transmission, a power battery, a brake system and an entire vehicle control system. Motor-generators include main and auxiliary ones. The main motor-generator is connected to the transmission and the auxiliary motor-generator is connected engine. The motor-generators are linked with the power battery. Multiple operating modes include pure motor driving mode, series driving mode, parallel driving mode, and hybrid driving mode as well as engine idling stop mode and regenerative braking.

Patent publication WO200437594 for "Hybrid driving system for a motor vehicle" shows a hybrid driving system with first and second electric machines which can provide motive power and electrical generation. One of the electric machines is permanently connected to the input of the gear box and a connectable clutch is arranged between the drive shaft of a combustion engine and each machine, which are connectable to each other or to an electric power source by means of an electronic power control. The two electric machines are arranged in the same crankcase.

Patent publication JP2004136743 for "Power train structure for hybrid electric vehicle" shows a power structure for a hybrid electric vehicle with a vehicle power take-off unit that can be turned into a hybrid vehicle while the mount position of a transmission relative to the vehicle body is retained.

Patent publication DE10246839 for "Power transmission for hybrid road vehicle can operate as parallel or series hybrid and incorporates two electrical machines and double-plate automatic clutch" shows a hybrid road vehicle that can operate as parallel or series hybrid and incorporates an automatic clutch with two plates. A first motor/generator is coaxial with the crankshaft of the internal combustion engine with a rotor connected to the crankshaft. The clutch connects to a planetary output drive gear system. A second motor/generator is connected to the output power shaft that drives the wheels.

Patent publication US20040050599 for "Multi-axle vehicle drive system" shows a drive assembly with an electric motor for use with a multi-axle vehicle. The vehicle generally includes an engine driving a first axle and a drive assembly with an electric motor driving a second drive axle. A frequency variable generator has an input shaft driven by the engine and the electric motor receives output power from the generator. An inverter is electrically connected to a battery or the frequency variable generator, as well as to the rotor.

Patent US6,638,195 for "Hybrid vehicle system" shows a hybrid vehicle system with an internal combustion engine driving one set of wheels and an electric motor connected to the other wheels via an active clutch system. An active clutch system is selectively engaged and disengaged depending on whether the vehicle is in an engine mode, an electric mode, a combined electric motor and interval combustion engine mode, or regenerative braking mode.

Patent US5,172,784 for "Hybrid electric propulsion system" describes a hybrid vehicle with an electric motor having a fixed stator, and two axially opposed permanent magnet or induction-type rotors, one for each output propulsion shaft.

Patent publication US20030019674 for "Hybrid electric all-wheel-drive system" shows vehicle in which an internal combustion engine drives one pair of wheels and an electric motor drives the other pair of wheels providing hybrid electric all-wheel-drive. An integrated starter/alternator starts and assists the engine or generates electricity. Regenerative braking is also provided. A double-rotor electric motor with two rotors and a single stator provides the functions of a conventional traction motor plus an axle differential/torque coupling device.

Patent USS,492, 192 for "electric vehicle with traction control" describes a vehicle traction control system comprising an electric motor and drive system for an electric vehicle, at least one driven wheel mechanically connected to the electric motor and drive system, at least one non-driven wheel, and a controller coupled to the driven wheel. A motor drive unit is described as being "a single drive motor driving both wheels" or it may be "two motors connected back-to-back driving wheels ... or may be two or more motors with each motor incorporated into each wheel assembly."

Patent publication US20040166980 for "Transmission arrangements for hybrid electric vehicles" shows a geared, power transmission mechanism for a hybrid electric vehicle wherein multiple power flow paths are established between an engine and vehicle traction wheels and between an electric motor and the vehicle traction wheels.

Patent publication JP2002307956 for "Driving device for vehicle" shows a hybrid vehicle using an engine and an electric motor where the motor has a starter function for starting the engine and a power generation function as well as an assist function assisting a driving force of the engine. The motor and engine are connected in parallel to transmit power to wheels through a transmission.

Patent publication US20020173401 for "Hybrid drive system for motor vehicle with powershift transmission" shows a multi-speed transmission having an input shaft driven by the engine, an output shaft connected to the driveline, an electric motor, a planetary geartrain driven by one or both of the engine and the electric motor. A plurality of power-operated clutches selectively engage components of the planetary geartrain.

Patent publication US20020177500 for "Drivetrain for hybrid motor vehicle" shows a hybrid transmission including a multi-speed planetary gearbox, an automated shift system, and an electric motor/generator. The electric motor is operably controlled to drive the gearbox to establish an electric drive mode.

Patent publication US20020177504 for "Power train with hybrid power source" shows a power train of a motor vehicle with a hybrid drive. The power train can be shifted into different gears depending on operating conditions including traction condition, coasting, cold starting, and warm starting.

Patent publication US20040251758 for "A hybrid propulsion system for a motor vehicle" shows an integrated starter generator with a primary rotor associated with a primary stator and a secondary rotor associated with a secondary stator. A one-way clutch is disposed between the primary rotor and the secondary rotor that permits both rotors to be selectively locked together in one direction of rotation or operate independently in the opposite directions of rotation.

Patent publication JP2001105910 for "Hybrid driving system for vehicle," is a hybrid system that is low cost and employs generally conventional designs of non-hybrid vehicle power train.

Other references describing various hybrid configurations include Patent publication JP2002370556 for "Driving device for hybrid car" Patent US 4,165,795 to Lynch et al; Patent US 5,117,931 to Nishida; Patent US 3,923,115 to Helling, Patent US 4,588,040 to Albright, Jr. et al; Patent US 5,318,142 to Bates et al. Patent US 5,120,282 to Fjallstrom (showing a parallel hybrid drive with two electric motors); Patent US 4,405,029 and 4,470,476 to Hunt (showing parallel hybrids) Patents US 4,305,254, 4,407,132, and 4,335,429 to Kawakatsu (the latter showing a parallel system with two motor/generator units); Patent US 4,180,138 to Shea; Patent US 4,351,405 to Fields et al; Patent US 4,438,342 to Kenyon; Patent US 4,593,779 to Krohling; and Patent US 4,923,025 to Ellers; Patents US 5,301,764 and 5,346,031 to Gardner (showing two wheels driven by an internal combustion engine and two electrically-driven wheels with various clutches to distribute torque among components); Patents US 5,667,029 and 5,704,440 to Urban; Patent US 5,495,906 to Furutani (an internal combustion engine driving a first set of wheels through a variable-ratio transmission and an electric motor driving a second set of wheels); and Patent US 5,823,280 to Lateur.

Existing internal combustion vehicle designs are often used, by commercial vehicle manufacturers, as a starting point for the design and manufacture of a hybrid vehicle. For example, a manufacturer may desire to offer a hybrid variation of an existing model. Or a manufacturer may wish to offer a hybrid vehicle that is similar to an existing design rather than design one from the ground up. Also, commercial and public sector research may involve the actual modification ("tear-up") of purchased or donated conventional vehicles to create a hybrid. For example, students have made such modified vehicles for years for the Department of Energy Challenge X competition. Such research vehicles are often focused on specific performance criteria, such as mileage. As such their modification is not constrained by the considerations that go into the design of a safe, comfortable, and commercially-viable product as desired by manufacturers. Therefore, such tear-ups may involve compromises that a vehicle manufacturer could not afford to make, such as reductions in payload capacity, interior space, seating, safety, and performance. In addition, the economics of such modifications may involve the expense of substantial redesign to fit components and interface them mechanically and to permit optimal control.

Thus, according to the conventional manner of offering a FWD architecture with AWD or a RWD architecture with AWD, a manufacturer might desire to design or redesign the driveline, chassis and bodywork to accommodate additional components to provide upgraded performance, a different drive train such as hybrid functionality or all-electric drive train. In addition, such modifications may offer the promise of additional features related to performance and safety. There is a need to provide these functional features with minimal impact on existing designs. It is believed that there is a need for a supplemental drive arrangement that can be added to a vehicle while minimizing the impact on the overall architecture, driveline, chassis, and bodywork. Further, there is an ongoing need for new systems that can improve fuel economy and lower emissions and upgrade performance and safety irrespective of whether such systems require substantial vehicle redesign or tear-up.

### Disclosure of Invention

The invention provides an electric propulsion module and/or related components that allows vehicle platforms to be adapted by adding a variety of drive features with minimal modification of vehicle designs. For example, using one embodiment of the power module, a front-wheel drive vehicle can be upgraded to four-wheel drive with or without the hybrid features of regenerative braking, automatic engine shutdown and restart, and launch assist. In other examples, the added features could include any or all of the above hybrid features and/or active stability control (ASC), anti-lock braking (ABS), and active traction control (ATC). In another embodiment, an existing vehicle platform can be modified to provide all-electric propulsion.

An embodiment of the electric propulsion module defines an electric axle, complete with a mechanical drive system for two wheels, complete with a controller, power source, and energy storage. In some embodiments, the controller interfaces with an existing vehicle's data bus to obtain information such as steering input and speed of wheels other those connected to the power module drive system to enhance its provision of ASC, ABS, and ATC delivered through the direct control of the incorporated mechanical drive system.

Mechanically, in embodiments, the electric propulsion module provides motive power for two wheels, preferably by incorporating two motors, one for each wheel. The power module preferably also contains a brake and suspension for each wheel as well as a suitable transmission and drive so that it can be attached to the host vehicle's suspension hardpoints without substantial vehicle modification or "tear-up." Preferably, also, the module is configured such that it can be fitted into a space that is not otherwise used for payload. For example, the module could be configured to displace the spare tire well and the vehicle provided with run-flat tires.

In a preferred embodiment, the electric propulsion module is used to upgrade a vehicle in which power is supplied to one set of wheels (e.g., front or rear) by a so-called "mild hybrid system;" which is also known as a "start-stop system" or a "belt-alternator-starter" system. Such mild hybrids shut down the engine when power is not required for idle periods, such as when the vehicle is in stop and go traffic or stopped at a light. The starter is used to start the engine and, in some types, simultaneously launch the vehicle as the engine starts, Thus, in a mild hybrid, the control required to start and stop to save fuel is therefore already provided by the existing vehicle design. By adding the electric propulsion module to displace the unpowered wheels and the associated suspension, the mild hybrid can upgrade the mild hybrid to a full hybrid, while adding further features as listed. In addition, the starter/alternator can also generate energy by regenerative braking, if the mild hybrid system is so-configured. The mild hybrid system which is configured to charge the battery of the mild hybrid's system, can be interconnected with the electric propulsion module to supply energy to the electric propulsion module's energy storage device as well.

The electric propulsion module is a particularly complementary combination with such a mild hybrid because the controls for starting and stopping the engine are already in place in the mild hybrid configuration. Thus, no additional modification of the controls is required to accommodate the upgrade. The addition of the electric propulsion module can boost the performance of the mild hybrid to that of a full hybrid vehicle, that is, one in which the power provided by the electric motor or independent in-wheel hub or body mounted motors is substantial in terms of power and work load. In addition, the features of regenerative braking, enhanced acceleration and other features can be added.

In a preferred embodiment, the electric propulsion module employs two motors. These may be hub motors or a pair of motors centrally mounted on a subframe and connected by half-shafts to the two wheels. The centrally-mounted motors may permit easier feature modification of the electric propulsion module since varied motor models may be substituted to match the desired performance specification. Also, hub motors tend to have much higher mass, which may have adverse impact on performance and passenger comfort due to the concomitantly higher ratio of unsprung weight to sprung weight. Also, a sprung motor design may be cheaper than an electric propulsion module that employs hub motors.

In a variation on the foregoing embodiments, a clutch is provided between the rotors of two drive motors of the electric propulsion module. The clutch permits the rotors of the two drive motors to be selectively coupled. In a preferred embodiment, the coupling permits selective slipping or locking of the rotors (and consequently, the wheels). The clutch may be under automatic or drive control and may permit enhanced acceleration, enhanced performance under slippery conditions, or provide a mechanism to help a drive maintain or recover control during aggressive or emergency maneuvering. In a particular embodiments, two motors and the clutch are integrated in a common single housing.

### Brief Description of the Drawings

The accompanying drawings, which are incorporated herein and constitute part of this specification, illustrate presently preferred embodiments of the invention, and, together with the general description given above and the detailed description given below, serve to explain features of the invention.

Fig. 1 is a schematic illustrating an electric propulsion axle according to a preferred embodiment.

Fig. 2 is a schematic illustrating an electric propulsion axle supplementing the basic architecture of a front wheel drive (FWD) vehicle having a transversely mounted inline four cylinder internal combustion engine.

Fig, 3 is a schematic illustrating an electric propulsion axle supplementing the basic architecture of a rear wheel drive (RWD) vehicle having a longitudinally mounted V-10 cylinder internal combustion engine.

Fig. 4 is a schematic illustrating an electric propulsion axle in an electric all-wheel-drive (AWD) vehicle.

Figs. 5A and 5B are section views of an electric propulsion axle consistent with the embodiment of Fig. 3 in which the embodiment of Fig. 5A has separately housed motors and the embodiment of Fig. 5B has two motors in a single housing.

Figs. 6A and 6B show a cross-section view of an electromagnetic clutch unit in non-engaged and partially and fully engaged positions.

Figs. 7A - 7C show face-on and edge views, respectively, of an active and passive rotor, respectively, according to an embodiment of a electromagnetic clutch.

Fig. 8 is a circuit schematic showing a driver for an electromagnetic clutch according to a preferred embodiment.

Figs. 9 and 10 are top and bottom side views of a sub-chassis with drivetrain components and associated power electrical and control hardware.

Fig. 11 shows the sub-chassis with drivetrain components and associated power electrical and control hardware from a top rear view and includes a view of some suspension and wheel components.

Fig. 12 shows a close-up view of some elements of Fig. 11.

Fig. 13 shows a top view of a sub-chassis with drivetrain components and associated power electrical and control hardware.

Fig. 14 shows a bottom view of a sub-chassis with drivetrain components and associated power electrical and control hardware.

Fig. 15 shows a top view of a sub-chassis with motors, clutch, and electrical and control components removed.

Fig. 16 shows side front views of a sub-chassis with drivetrain components and associated power electrical and control hardware.

Fig. 17 shows a side view of a sub-chassis with drivetrain components without the associated power electrical and control hardware.

Fig. 18 shows a device to prevent unintended acceleration.

Fig. 19 shows a control system with sensors.

Fig. 20 shows a vehicle with a sub-chassis assembly mounted thereon including features of a mild hybrid power configuration.

Fig. 21A shows acceleration and velocity curves measured during city driving.

Fig. 21B shows the relationship, for two different values of generator excitation between a clutch force and air gap between the generator rotor and a tooth plate of the clutch.

Fig. 22 shows a skid plate that forms a part of an air duct together with a heat sink of a power electronic component.

Fig. 23 shows an electric propulsion module in which hub motors are employed.

### Mode(s) For Carrying Out The Invention

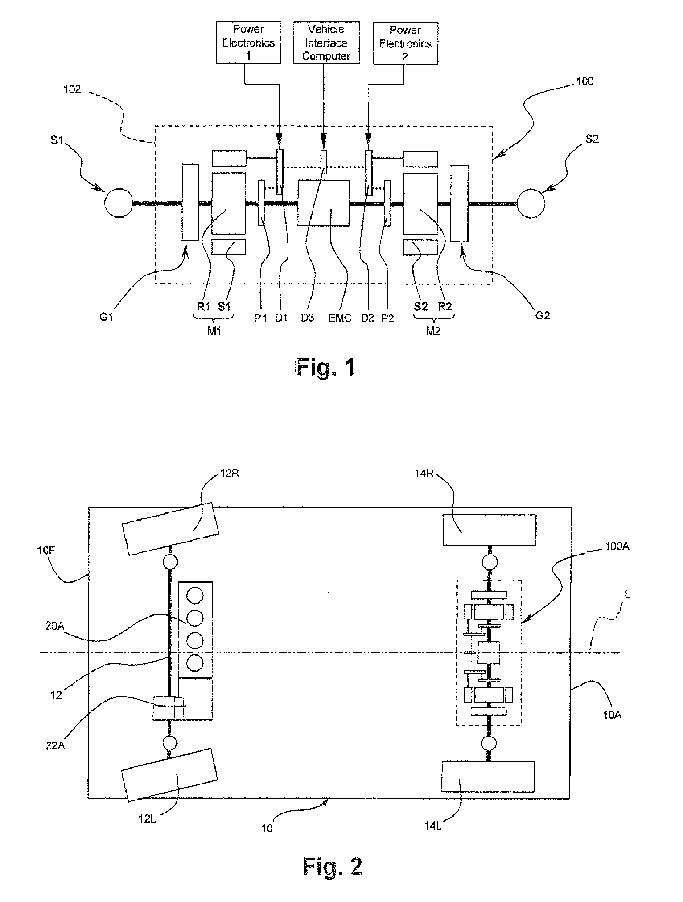

Referring now to Fig. 1, an electric propulsion axle 100 according to a preferred embodiment is disposed between first and second side shafts S1, S2, which rotationally couple the electric propulsion axle 100 to respective wheels (not shown in Fig. 1). Preferably, the first and second side shafts S1, S2 include so-called "half-shafts" or "side-shafts" that may include a relatively short driveshaft with either universal joints or constant velocity joints at either end of each drive shaft. In practice, the universal joints or constant velocity joints facilitate the transmission of torque via the driveshaft, regardless of the relative angular or vertical relationship of the driveshaft with respect to electric propulsion axle 100 or the corresponding wheel. Such an arrangement of the first and second side shafts S1, S2 allows movement in the suspension system that supports the wheel with respect to the vehicle, and simultaneously allows torque to be transmitted from the electric propulsion axle 100 to the respective wheels.

The electric propulsion axle 100 may include a housing (or sub-chassis) 102 that supports first and second electric motors M1, M2, which separately provide torque to the corresponding wheels via the respective first and second side shafts S1, S2. First motor M1 has a stator S1, which is fixed with respect to the housing 102, and a rotor R1 that is coupled for rotation with the first side shaft S1. Similarly, second motor M2 has a stator S2, which is fixed with respect to the housing 102, and a rotor R2 that is coupled for rotation with the second side shaft S2. No specific motor technology or topology is required. Where a housing or sub-chassis is described, an open frame, sheet metal box, fiberglass or other composite structure or any other support to permit the functions a drive including a stator and rotor may be provided.

The first and second motors M1, M2 may be any electric machine technology including, but not limited to, permanent magnet, AC induction, switched reluctance, and any other force-generation by electromagnetic means. Further, the motor topology, according to available package volume and performance requirements, could have the rotor internal to the stator (non-inverted design) or the rotor external to the stator (inverted design). Additionally associated with each of the first and second motors M1, M2 are optional respective rotational position sensors P1, P2, which may output signals that are indicative of the rotational position of the first and second rotors R1, R2, either with respect to one another, or with respect to a fixed reference frame, such as the housing 102. Of course, calculations based on the signals outputted by the rotational position sensors P1, P2 may additionally provide data regarding velocity and acceleration of the first and second rotors R1, R2. The rotational position sensors may be integrated in the motors M1 and M2 or the transmission gear sets G1 and G2 or interconnections or anywhere they may be used to indicate rotational position for the motors M1, M2.

The first motor M1 is rotationally coupled to the first side shaft S1 via a first gear set G1, and the second motor M2 is rotationally coupled to the second side shaft S2 via a second gear set G2. The first and second gear sets G1, G2 may include speed reducing gearing or speed increasing gearing, or a unitary gear ratio to allow for the translation of torque from the axial output of the motor to a second axial output determined by the position of the gear center-point(s) and may include single ratio, multiple ratio, single stage, multiple stage or continuously variable ratio gearing. Further, the type and arrangement of the gearing components may include, but are not limited to, planetary gearing, parallel shaft gearing, straight cut gears, hypoid gears, and bevel gears.

Although in the present embodiment, two motors are shown, which permit power to the wheels to be applied differently and selectively, a single motor with a transmission that provides multiple outputs could also be used in some embodiments. For example, a system is described in US Patent No. 6,834,567, which is incorporated in its entirety by reference herein. In this system, a single motor turns a drive shaft whose torque is applied to multiple slip clutches, each adjustable to a selectable operating torque to drive multiple outputs. Also, in other embodiments, instead of the motors being mounted inboard, hub motors could be used which reside in, or close to, the wheels and outboard of the suspension.

The transfer of torque from the first motor M1, via the first gear set G1, to the first side shaft S1, is independent of the transfer of torque from the second motor M2, via the second gear set G2, to the second side shaft S2. However, the torque of the first and second motors M1, M2 may also be coupled via an electromagnetic clutch EMC disposed between the first and second motors M1, M2. Essentially, the electromagnetic clutch EMC incudes a first operating state wherein the first and second rotors R1, R2 are uncoupled, i.e., torque is not shared between the first and second motors M1, M2, and a second operating state wherein the first and second rotors R1, R2 are mechanically coupled together for simultaneous or "locked" rotation. Optionally, a third operating state of the electromagnetic clutch EMC may provide partial coupling of the first and second rotors R1, R2, i.e., a limited amount of slip or relative rotation is permitted between the first and second rotors R1, R2. Although an electromagnetically operated clutch is preferable, other conventional clutches, e.g., a dry or wet disc and pressure plate system with mechanical, hydraulic or pneumatic actuation, may alternatively be implemented in lieu of the electromagnetic clutch EMC.

In the foregoing and other embodiments described herein, the clutch EMC may be replaced by a hydraulically-actuated, pneumatically-actuated, or other type of clutch.

Again, hub motors are an alternative to the design shown in the figure and such may be coupled in the manner described. In this case, the motors and gear sets M1, M2, G1, and G1 could be incorporated in the hub motor and allow elimination of the shafts S1 and S2 among other components. In other respects, such an embodiment may operate as discussed above with the clutch EMC located in a central position.

Electronic control of the electric propulsion axle 100 is preferable. The signals output from the rotational position sensors P1, P2 and a control signal from a vehicle interface computer are supplied to a first driver D1 corresponding to the first motor M1, a second driver D2 corresponding to the second motor M2, and a third driver D3 corresponding to the electromagnetic clutch EMC. Preferably, the first driver D1 controls the flow of electric energy from a power electronics first module to the first motor M1, and the second driver D2 controls the flow of electric energy from a power electronics second module to the second motor M2. The vehicle interface electronics and/or the power electronics modules may be mounted in or on the housing 102, or may be disposed remotely from the housing 102.

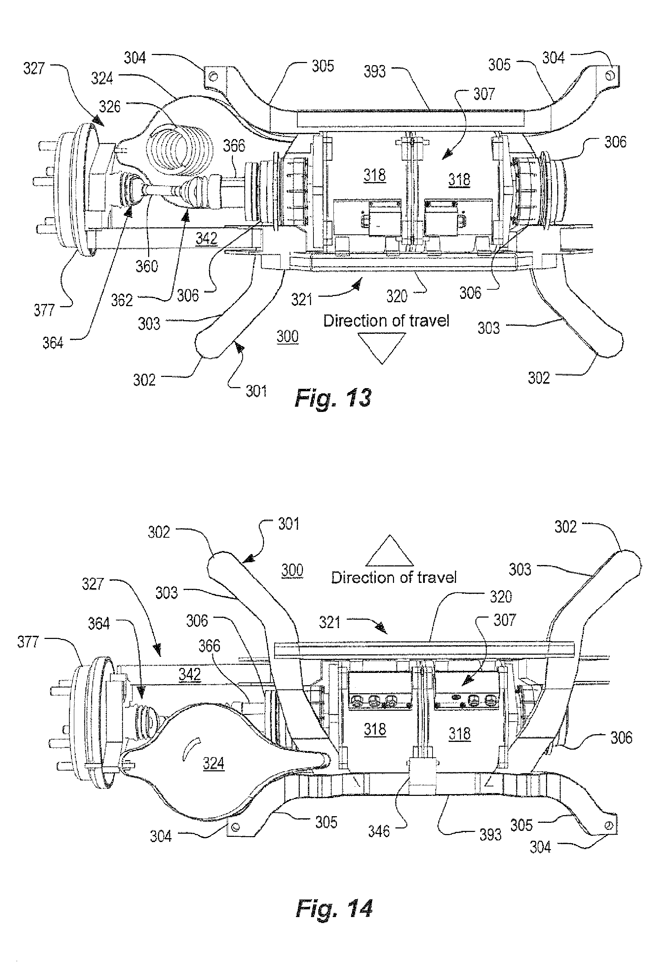

In embodiments, the motors M1, M2, gear sets G1, G2, side shafts S1, S2, and wheel mounts or hubs (not shown here, but see, for an example, Fig. 13 at 377) may be connected to a sub-chassis to form a self-supporting unit (module). The power electronics (inverter, switching, modulation, and any other components carrying current and dissipating substantial thermal loads), control hardware (programmable controller, sensors, and related elements), and power source (battery, fuel cell, ultracapacitors, and any other type of energy storage, with or without conversion) may be packaged separately or may have selected portions combined with the sub-chassis. A replacement suspension may be provided as well which may completely replace the suspension of the host vehicle or only partly replace the suspension of the host vehicle. Sub-chassis module embodiments are described with reference to the later figures. Such modules may be mounted on suspension hardpoints, thereby supplanting existing suspension components which they replace.

Fig. 2 illustrates a representative example of front-wheel-drive (FWD) architecture for an automobile 10. According to the example, a longitudinal axis L runs along the approximate centerline of the automobile 10 between a front (fore) end 10F and a rear (aft) end 10A. The axle 12 proximate the front end 10F transfers driving torque from an inline four cylinder internal combustion engine 20A, via a transaxle 22A, to a left front wheel 12L and a right front wheel 12R. The operating cycle of the engine 22A may be Otto, Diesel, Stirling, Brayton, Fuel cell-electric, steam, or any other means of providing vehicle motive power, and there could be more or less than four cylinders that are also arranged in an inline configuration or may be arranged in a "V," "W," boxer or other configuration.

In order to supplement the FWD architecture of automobile 10, without the conventional complexity of redesigning the driveline, chassis and body, the left rear wheel 14L and right rear wheel 14R may receive driving torque from an aft mounted electric propulsion axle 100A according to the embodiment described with reference to Figs. 1 and 2.

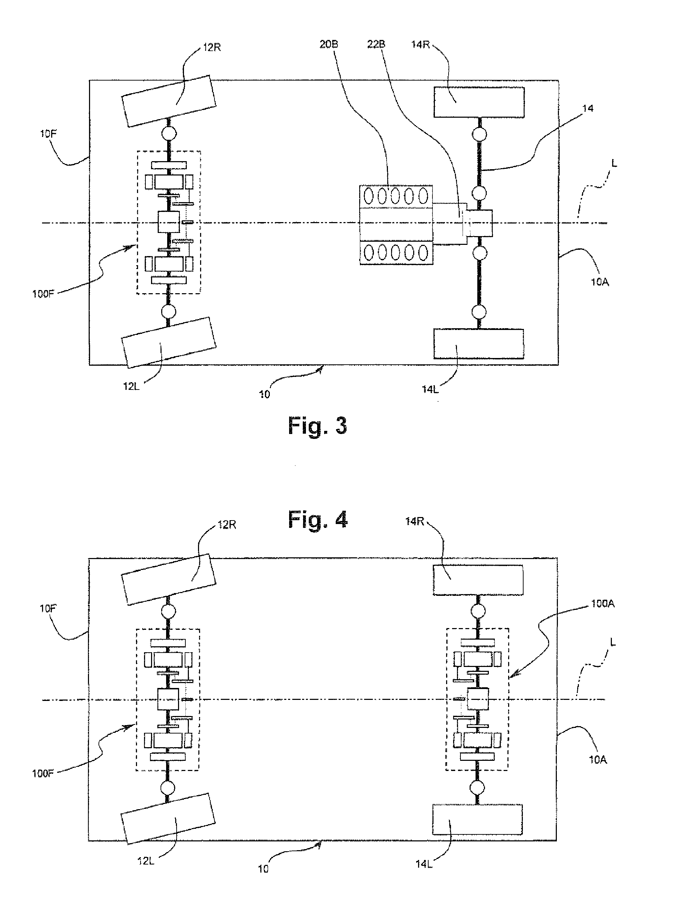

Fig. 3 illustrates a representative example of rear-wheel-drive (RWD) architecture for an automobile 10. According to the example, a longitudinal axis L runs along the approximate centerline of the automobile 10 between a front (fore) end 10F and a rear (aft) end 10A. The axle 14 proximate the rear end 10A transfers driving torque from a V-10 cylinder internal combustion engine 20B, via a transaxle 22B, to a left rear wheel 14L and a right rear wheel 14R. Again, the operating cycle of the engine 22B may be of any suitable type and may be of any suitable configuration.

In order to supplement the RWD architecture of automobile 10, without the conventional complexity of redesigning the overall architecture, driveline, chassis, and bodywork, the left front wheel 12L and right front wheel 14R may receive driving torque from a fore mounted electric propulsion axle 100F according to the present embodiment described with reference to Figs. 1 and 2.

Fig. 4 shows an electric all-wheel-drive (E-AWD) architecture for automobile 10. Specifically, the sources of driving torque for each of the left front wheel 12L, right front wheel 12R, left rear wheel 14L and right rear wheel 14R are corresponding electric motors within an aft mounted electric propulsion axle 100A and a fore mounted electric propulsion axle 100F, each according to the present embodiment described with reference to Figs. 1 and 2. The source of electric power (not shown) for the electric motors may by one or more batteries or fuel cells on board the automobile 10, or may be a dynamoelectric generator on board the automobile connected to a conventional internal combustion engine 10.

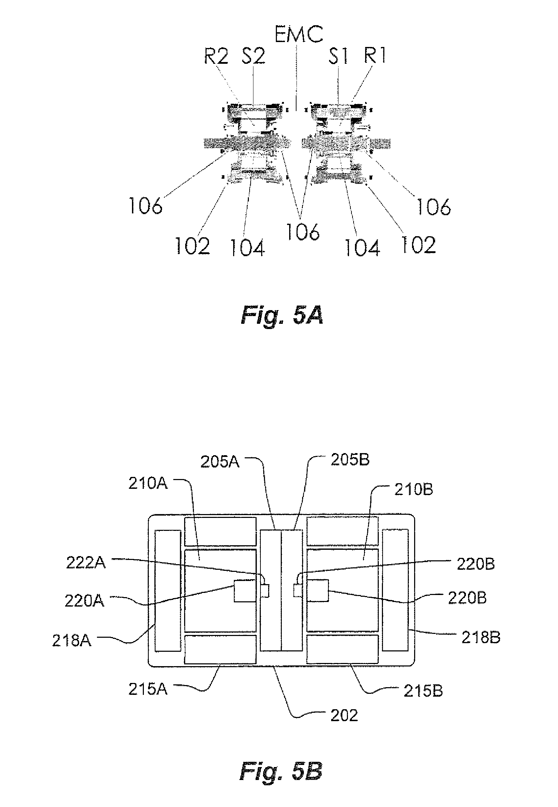

Referring now to Fig. 5A, an electric propulsion axle 100 consistent with most of the foregoing embodiments will now be described. In the present embodiment, the axle provided is a supplemental rear axle for an otherwise FWD (front wheel drive) vehicle configuration. As discussed elsewhere, the system could alternatively be applied to the front of an otherwise RWD vehicle configuration, or on the front or rear of an otherwise battery electric vehicle or series hybrid application. Alternatively two axle configurations may be employed to achieve a fully electric four wheel drive configuration.

Figs. 5A shows details of a preferred embodiment of independent clutches and a clutch disposed therebetween. In particular, the first torque source, as exemplified by a stator S1 and a rotor R1 of a first electric motor, and the second torque source, as exemplified by a stator S2 and a rotor R2 of a second electric motor, and may be connected via a clutch EMC. The stators S1, S2 are fixed with respect to respective housings 102, and the rotors R1, R2 are rotationally coupled with respective shafts 104. Bearings 106 support the shafts 104 with respect to the housings 102. Although separate housings 102 are shown for the respective torque sources, a single common housing may be provided for both torque sources.

Referring to Fig. 5B, in addition, the rotors and stators, output gearing, and electromagnetic clutch may be housed in a single casing to reduce the lateral dimensions of the components, In the embodiment of Fig. 5B, a motor housing/frame 202 endorses a pair of stators, 215A and 215B, pair of rotors 210A and 210B each independent except for the action of a clutch 205A/205B made up of engaging components 205A and 205B. Each rotor 210A and 210B may have a respective resolver 220A, 2208 and a respective encoder 222A, 222B as well as output gearing 218A and 218B. At a minimum, the combination of independent rotors with corresponding stators and a clutch in a common housing offers the potential of reducing the maximum axial dimension of the assembly compared to separately-housed motors and clutch. This has a large advantage in permitting greater suspension travel because the angles of the half-shafts between the CV joints (or wherever the slack is taken up) can be reduced. Correspondingly any ball spline or plunge joint provided to accommodate the suspension travel will not have to work over as great a range or, in some embodiments, it will be possible to eliminate the need to allow the shaft to be extended. Note that as used here, the term half-shaft, *per se,* is not intended to connote a particular size.

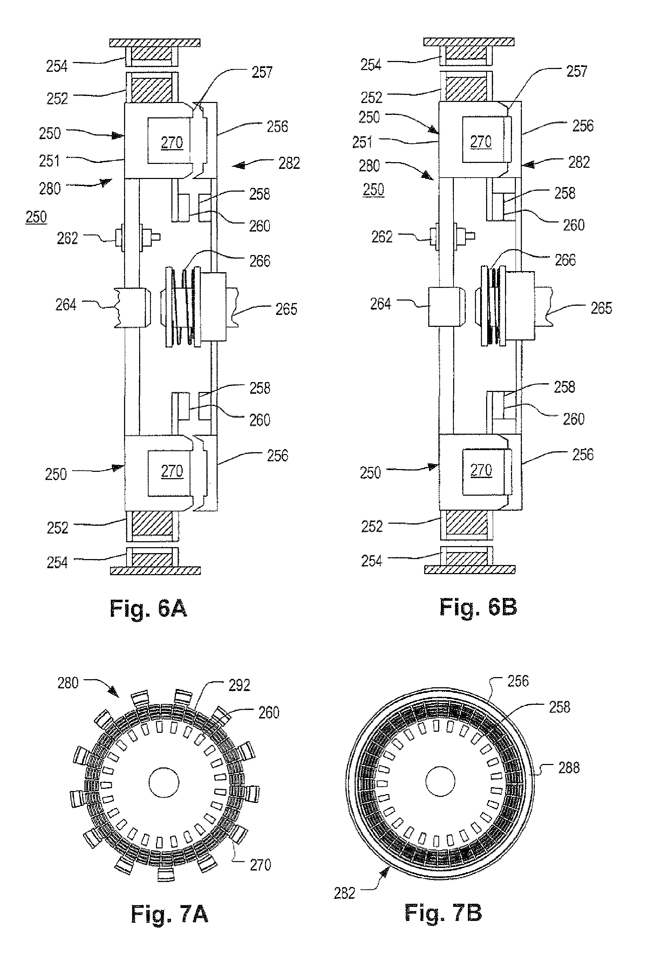

Referring now to Figs. 6A and 6B, an embodiment of clutch 250 is electromagnetically actuated but could be modified by replacing the electromagnetic actuator with a hydraulic actuator, pneumatic actuator or other type of actuator. The electromagnetic clutch 250 includes one or more stator windings 254 and active rotor windings 252 which, together, form a generator. One or more magnetic excitation coils 270 receive current from the active rotor windings 252 after rectification (being converted to DC) by one or more rectifiers 262. One motor is connected to rotate the active rotor 280 about the hub 264. The other motor is connected to a passive rotor 282 with heads 256 that are attracted to excitation coils 270 when current runs in the excitation coils 270. The heads 256 and cores 250 of excitation coils 270 may define a magnetic circuit that is completed when the heads 256 approach and contact the cores 251. The heads 256 are maintained in the position shown in Fig. 6 by a spring 266. When the excitation coils 270 are energized, the heads 256 are attracted to the excitation coils 270 compressing the spring 266 as shown in Fig. 6B. As a result, surfaces such as surfaces 257 on the heads 256 and excitation coils 270 may contact each other to cause the active and passive rotors 280 and 282 to share torque, tending to cause them to converge toward a common rotating velocity. Teeth 258 and 260 may be provided to cause the active and passive rotors 280 and 282 to lock together such that their speeds are appropriately matched.

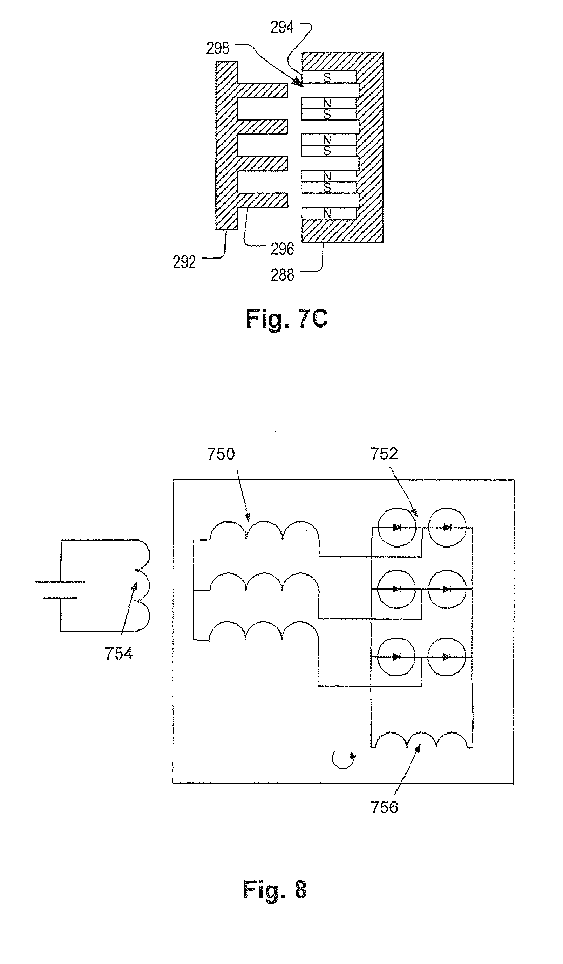

The surfaces 257 may provide for frictional engagement which may permit slipping. Alternatively, the active and passive rotors 280 and 282 may be provided with other mechanisms (brakes) for creating a drag force between them. For example, a magnetic brake may be provided using magnets and non-ferromagnetic conductor which come together and interact when the spring 266 is compressed partially. When the spring is compressed more fully by sending high current through the excitation coil, the teeth may engage fully locking the passive and active rotors 280 and 282. For example, as shown in Figs. 7A, 7B, and 7C, magnet arrays 288 that interleave with the teeth 296 of plates 292 arranged along the face of the passive and active rotors 280 and 282. As the passive and active rotors 280 and 282 approach each other, the teeth of the plates 292 fit into gaps 298 between permanent magnets 294, thereby interleaving progressively with the fields of the permanent magnet arrays 288 causing a magnetic braking effect caused by the induction of eddy currents in the teeth 296.

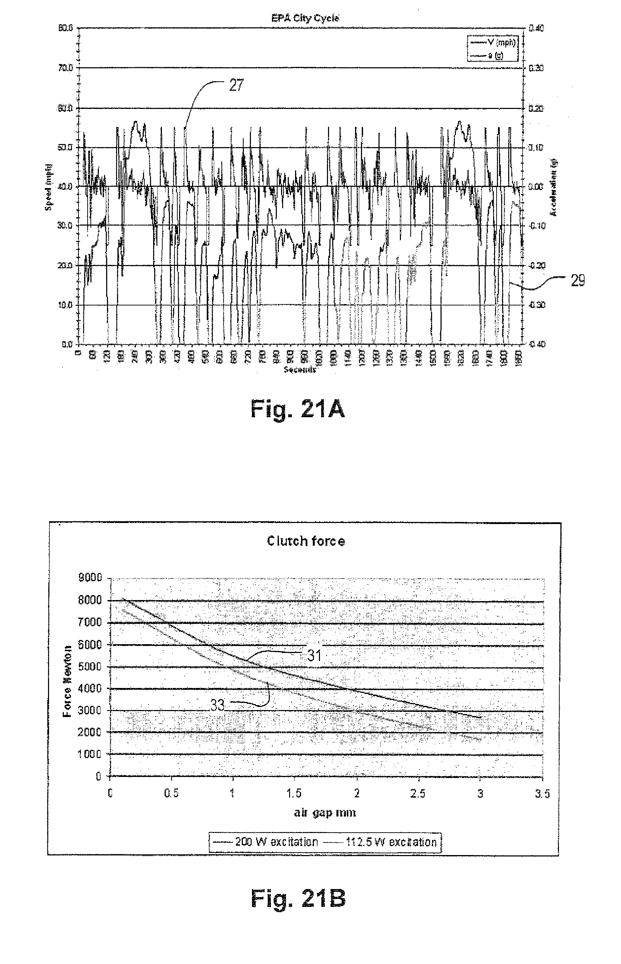

To induce a current in the excitation windings 270, the stator 254 is energized. Referring now additionally to Fig. 8, upon excitation of the generator stator 254, in Figs. 6A, 6B (754 in Fig. 8), a current is induced in the generator windings 750 (three are illustrated in Fig. 8, but there may be more or fewer generator windings). In turn, the currents are rectified by corresponding rectifiers 262 (752 in Fig. 8) and supplied to the magnetic excitation coils 270 (756 in Fig. 8), which displaces the passive rotor 282 against the biasing force of the spring 266 so as to partially to fully engage the active rotor 280. Fig. 21B shows the relationship, for two different values of generator excitation 200 watt corresponding to curve 31 and 112.5 watt corresponding to curve 33 - between clutch force and air gap between the active and passive rotors 280 and 282.

Note that the clutch 250 may be any suitable clutch design known in the prior art or which may be developed in the future which provides at least locking and/or slip capability. Preferably, a lock-up type clutch with selectable torque transfer is used. Such clutches may be hydraulic, electromagnetic, wet or dry.

In operation, the nominal action of the electric propulsion module 100 is for the motor M1 to provide driving torque to the left rear wheel 14L, and for the motor M2 to provide driving torque to the right rear wheel 14R. The motors M1, M2 independently provide torque for the left and right wheels, respectively. However, under certain circumstances, e.g., during inclement weather, when there is vehicle instability or when launch assist is desirable to improve acceleration performance, the left and right sides of the electric propulsion module 100 can be coupled, either partially or locked together, depending on the control signal supplied by the Vehicle Interface Control. The command to lock the clutch could be provided automatically according to temperature (e.g., temperature below a threshold that indicates freezing conditions), rain sensors (automatic windshield wiper activators use such sensors), a user-actuatable command switch, wheel slip detection indicating slippery conditions, or any other kind of automatic or manual command input control.

An example of a mechanical and electrical package includes the following components that may be provided for an electric propulsion module 100. Two electric motors, for example, two 13 kW (peak) electric motors located near wheel. Alternatively, hub motors can be provided in the wheels driven by the non-motor components of the electric propulsion module 100. Motor control software and drive electronics are preferably provided in an embedded system that integrates primary and final control functions. Preferably this is provided by a programmable computer module and associated power electronics for the final controller(s). Hardware and software can include a vehicle interface (including sensors) and controls software. For example, an interface to an existing vehicle bus can allow for the application to the controller inputs of wheel speed, steering, brake, and throttle input. Additional sensors can be provided to detect vehicle yaw, acceleration, road speed, or any kind of input that can be used to effect a desired control scheme.

Note that here and elsewhere, wheel speed, steering, throttle input, and other signals to which the controller is responsive can be obtained directly by sensors or by sensors indicating surrogate sources. So while the discussion of controller algorithms and hardware may refer to such input signals, it is contemplated that equivalent signals may also, or alternatively, be used. For example, instead of detecting wheel speed directly, a sensor may be configured to detect the speed or angular position of a shaft, motor rotor, or other parameter which may be combined with other data such as a clock signal to obtain essentially the same information. For example, wheel speed may be used to determine if a slipping condition has occurred. The same event may be indicated by abrupt changes in drive shaft speed or motor rotor speed or displacement vs. time. Similarly, steering input may be indicated by steering wheel input, or by a sensor connected to an output effector such as a steering linkage, with equivalent information being obtained. For another example, equivalents of throttle input can be obtained from intake manifold pressure or throttle valve position of an internal combustion engine, or by a throttle pedal encoder or other direct input sensor. Thus, when discussed in the instant specification, inputs such as these and others can be measured directly or their equivalent information may be detected and used as inputs to the controller discussed.

Also provided in the current example are an energy storage system including rechargeable batteries and battery management electronics and software for managing charge and drain functions, balancing of series connected cells, and thermal management. A generator may be provided for battery recharge, steady state energy flow. The generator may be one that can be operated as a motor or a generator and thereby may be controlled to provided additional launch assist, adding further to the electric two electric motors. The generator function can be provided also by the motors. Also included are mechanical drive components such as gear reduction, drive shaft (extendable or fixed-length) between the motors and drive wheels. Preferably, also included are interface elements which permit communication with existing vehicle data systems, such as a vehicle data bus. Also included is a continuously variable and/or locking electromagnetic clutch to selectably connect the output shafts of each motor. Brakes are provided, one for each wheel or wheel mount.

Example power and other dimensional ranges for passenger vehicles are as follows. The electric propulsion module added to an existing internal combustion engine-driven vehicle may add between 25% and 60% of the total available vehicle torque that can be transmitted to the ground when the torque converter is engaged during full throttle launch up to a vehicle velocity of approximately 40 mph. In another embodiment, the added available torque is between 30% and 50% of the total available vehicle torque up to 30 mph on a 0.7 coefficient of friction road condition and more as the surface coefficient of friction decreases up to 50%. In yet another embodiment or variant, launch assist is provided under high coefficient of friction conditions including to add at least a 2 second improvement in 0-60 mph acceleration time as compared to the base vehicle, for example, a 10 second 0-60 mph acceleration time.

In a variation of the foregoing embodiment, the electric propulsion module is sized to provide system torque up to at least 40 mph and at least ½ the total rear drive torque to one wheel at a time and/or up to 100% of total rear drive torque with the clutch fully engaged to a single rear wheel that is traversing a sufficiently high coefficient of friction surface while the opposing wheel is traversing a comparatively low coefficient of friction surface. Preferably, the torque is variable and controllable.

In another variation, the energy storage system of the overall system can be sized to accommodate up to ten sequential 0 - 60 mph launches before requiring a recharge.

Additionally, the complete electric propulsion module 100 provides suitable interface to be compatible with internal combustion engine start-stop and cylinder deactivation systems as well as a full hybrid power train operating on an entirely separate axle of the vehicle (i.e. a separate electric motor/engine combination functioning as a hybrid power source). As discussed elsewhere, the interface providing for engine start-stop can be provided in a mild hybrid base vehicle, reducing the complexity of interfacing the vehicle and the electric propulsion module.

At least the following three operating modes can be provided by the combined vehicle and electric propulsion module. First, the electric axle operates as a primary propulsion drive without assistance from the internal combustion engine or other engine and powertrain when the internal combustion engine is commanded to stay de-energized. This mode allows the system to provide a "plug-in" hybrid functionality. Second, the electric propulsion module 100 delivers motive force in parallel with an opposing, internal combustion engine-or hybrid driven axle in accordance to the driver's torque request and executed either as an accelerative launch enhancement or as an all-wheel drive function. Third, the electric propulsion module 100 operates as a series hybrid with an existing starter/alternator or additionally-provided generator which is installed to upgrade the vehicle (in this case, the transmission could be left in a neutral setting while the vehicle is driven or, if no transmission is provided, the engine and generator are present solely for the generation of electricity).

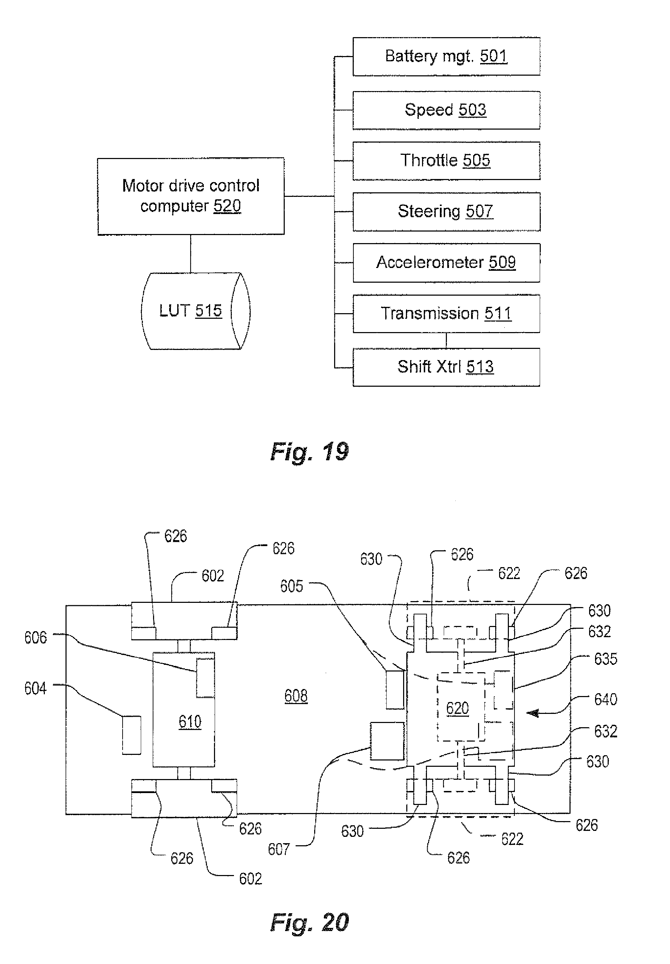

Fig. 20 shows the features common to many of the embodiments described herein in which a vehicle 608 which has a main drive system 610 power two wheels 602 and attachments (or hardpoints) 626 for two further wheels which would ordinarily be attached to the attachments 626. The attachments 626, for example, might be suspension lugs or simply reinforced parts of a unibody of the vehicle 608. A propulsion module 640 has a sub-chassis 635 with fixtures 630 configured to mate with the attachments 626 permitting the sub-chassis 635 to be attached to the attachments 626. More specifically, the spacing, sizes, shapes, number, and positions of the fixtures 630 complement those of the attachments 626, thereby allowing the sub-chassis 635 to be attached to the target vehicle 608 at the attachments. The sub-chassis 635 may form a self-supporting unit with one or more motors 620 to drive the wheels 622. In preferred embodiments, the wheels 622, as discussed, are driven independently by separate motors or separately controllable drive outputs 632 of a single motor both embodiments being represented figuratively at 620.

In a preferred embodiment, one pair of wheels 602, for example a front axle's wheels 602, are powered by a mild hybrid system (also called a start-stop system or a belt-altemator-starter system). In such a case where the drive system 610 shown in Fig. 20 is such a mild hybrid drive, a controller 604 would ordinarily be present which controls a starter drive 606 and an engine (not shown separately) to provide the mild-hybrid functionality.

In a mild hybrid system, a primary motor, such as an internal combustion engine, is turned off when the vehicle comes to rest and when power is not requested by the throttle and started when power is requested by the throttle. In response to a power request in a mild hybrid, the combined starter/alternator immediately engages and the engine is started. During this process, depending on the particulars of the design, the engine may be started by the starter motor, while the engine is engaged with the drivetrain, thereby simultaneously rotating the engine and the wheel drive system. Thus the initial launch, which happens while the engine is being brought from stopped to running condition, is provided by the starter motor.

In many such systems, the starter/alternator may be larger than a conventional starter motor, operate at a higher bus voltage then the 12 volt system customarily in a vehicle, and simultaneously provides the same charging function, through a DC to DC converter, as a traditional 12 volt alternator. The starter/alternator can also generate energy during braking that is stored in battery pack that is later used in the aforementioned launch mode.

The sub-chassis 635, in the mild hybrid embodiment, is provided to upgrade the mild hybrid functionality to provide strong (or full) hybrid functionality, launch assist, four wheel drive and additional regenerative braking, among other functions. The sub-chassis and related components such as a controller 605 and battery and power electronics 607, are a particularly complementary combination with such a mild hybrid because the controls for starting and stopping the engine are already in place in the mild hybrid configuration. The addition of the sub-chassis system can boost the performance of the mild hybrid to that of a full hybrid vehicle in which the power provided by the electric motor or independent in-wheel hub or body mounted motors is substantial in terms of power and work load. That is, regenerative braking, acceleration and launch assist, certain types of active stability control using the electric motors and attached brakes, antilock braking control, traction control, and four-wheel drive/all-wheel drive functionality. These features are provided by means of the sub-chassis 635 and related components such as the motor or motors 620, a controller 605 and battery and power electronics 607, as discussed above. In an alternative embodiment, one or more of the related components, namely, the battery and power electronics 607 and the controller 605 can be attached to the sub-chassis 635 (as indicated by broken lead lines). Although shown as one unit, the battery and power electronics 607 may be separate components, each or both of which may be affixed to the sub-chassis 635.

Therefore, in a thusly-upgraded mild hybrid, there would be a controller that controls the drive 610 and starter drive 606. A separate controller 605 provides the additional functionality of the hybrid sub-chassis 640 and related components. In an alternative embodiment, the controller 604 may be replaced with end-effectors that are controlled by the controller 607, thereby allowing the controller 607 to take over the control of the wheel drive and starter drive 610 and 606,

Alternatively, a mild hybrid controller may be replaced by a special controller that causes the internal combustion engine can to remain off while the vehicle is propelled by the electric drive system during electric-only operating modes. The electric-only mode can be invoked according to the prior art or as elsewhere discussed in the present specification. In addition, electric-only mode can be commanded manually by a user control or automatically as a preferred mode in a so-called plug-in hybrid system in which the motor battery can be charged externally of the vehicle with the engine being used when battery levels drop to a certain level.

In accordance with various embodiments, an electric propulsion module provides individual wheel torque management using an electric-only drive as well as an apparatus that allows energy to be sent to either wheel through independent electric motors and a partial or full "locking" feature that connects the two electric machines together when commanded to do so. The description below and elsewhere refers to the overall system, overall control of the system as well as a method of using the "locking" feature when vehicle conditions meet one or more of the following conditions: (1) wheel spin detected under driving mode; (2) vehicle yaw, compared to driver steering input; exceeds an error threshold that allows differential torque and/or locking of side to side device to correct yaw error, keeping the vehicle stable; (3) off road mode is detected, automatically, or through the activation of a user switch, to "lock" the two drive wheels together to improve low coefficient of friction (internal combustion engine/snow) traction and/or off-road functionality; or (4) high power lunch" mode is detected (high levels of accelerator request and little to no steering input detected), allowing system to lock side to side torque generation to improve initial traction resulting in maximum acceleration. The departure from the above conditions may also be detected (or manually invoked) to reduce or reverse the wheel torque coupling provided by the clutch.

In accordance with embodiments, an electric propulsion axle, when added to the rear axle of an otherwise front wheel drive vehicle (driven itself by a traditional or hybrid drive), provides an add-on AWD system for existing vehicle designs that do not include an AWD system. This includes front-to-rear and side-to-side AWD functionality, launch assist on high and low coefficient of friction road conditions, and with the hybrid functionality, the improved performance of AWD can be provided along with equivalent or better fuel economy compared to a vehicle without the AWD system.

In addition to the above, the electric axle, as described herein, may provide benefits in a design in which the electric axle is incorporated in the original vehicle design rather than being substituted into an existing one to upgrade it. So the embodiments are not necessarily to be understood as limited to the vehicle-modification task.

In accordance with preferred embodiments, an electric propulsion axle as compared to known systems provides hybridization and fuel economy benefits, improve vehicle acceleration, and the ability to incorporate AWD functionality and individual wheel torque management as a safety enhancement to a particular vehicles. Vehicle architecture including the electric propulsion according to the preferred embodiments may be the only way to provide an AWD system for those vehicles that are not developed to accept an otherwise mechanical AWD system.

In accordance with embodiments, there is provided an electronically controlled electromagnetic clutch that, when energized, can lock together two motor outputs or variably transfer torque from one motor to the opposite output half shaft, otherwise, the motors are connected or, in the case of the incorporation of wheel motors, housed within their respective wheels independently.

In accordance with embodiments, each electric motor is rendered as a stator plus a rotor plus a position sensor.

In accordance with embodiments, no specific motor technology is required - the electric motors can be any electric machine technology including, but not limited to permanent magnet, AC inductance, switched reluctance, and any other force-generation by electromagnetic means. Further, the motor topology, according to available package volume and performance requirements, could have the rotor internal to the stator (non-inverted design) or the rotor external to the stator (inverted design).

In accordance with embodiments, each side shaft may be a half shaft with appropriate constant velocity and related joints that connect a fixed, rotating member (motor output), to a suspended, driven wheel/tire. In embodiments, the half shafts may be extendable, such as ball-spline shafts.

In accordance with embodiments, an electric propulsion axle provides individual wheel torque management, which enhances safety similar to brake-based yaw stability control. To implement this, the controller may be programmed using the event triggers that ordinarily invoke active stability control, such as threshold error of steering input (and concomitant predicted yaw rate) against measured yaw rate. However, rather than applying brakes to the wheels, torque providing a braking effect or forward or reverse torque causing a moment about the center of gravity of the vehicle or enhanced or increased forward or backward drag may be generated at each individually controlled wheel by application of forward or reverse torque to the wheels, depending on the conditions.

In accordance with embodiments, a system including the electric propulsion module may be used to provide a primary drive axle for an otherwise battery electric or series hybrid electric architecture.

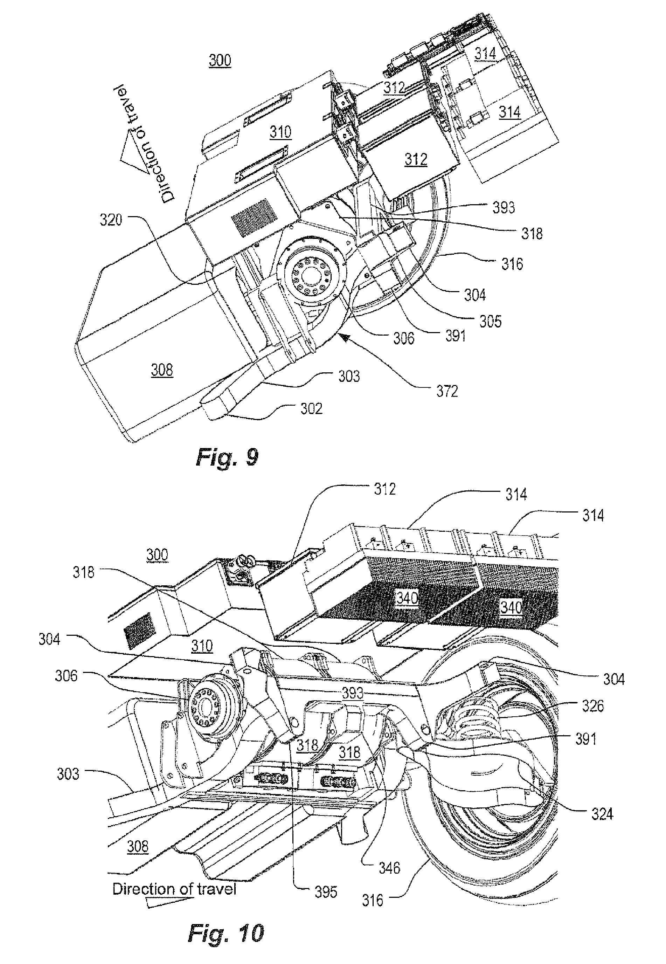

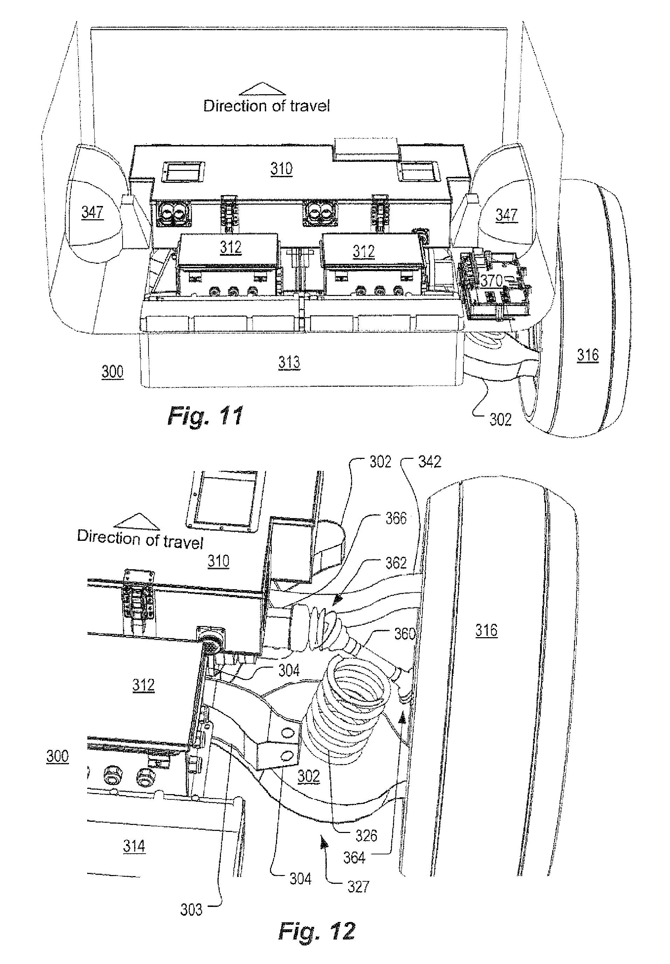

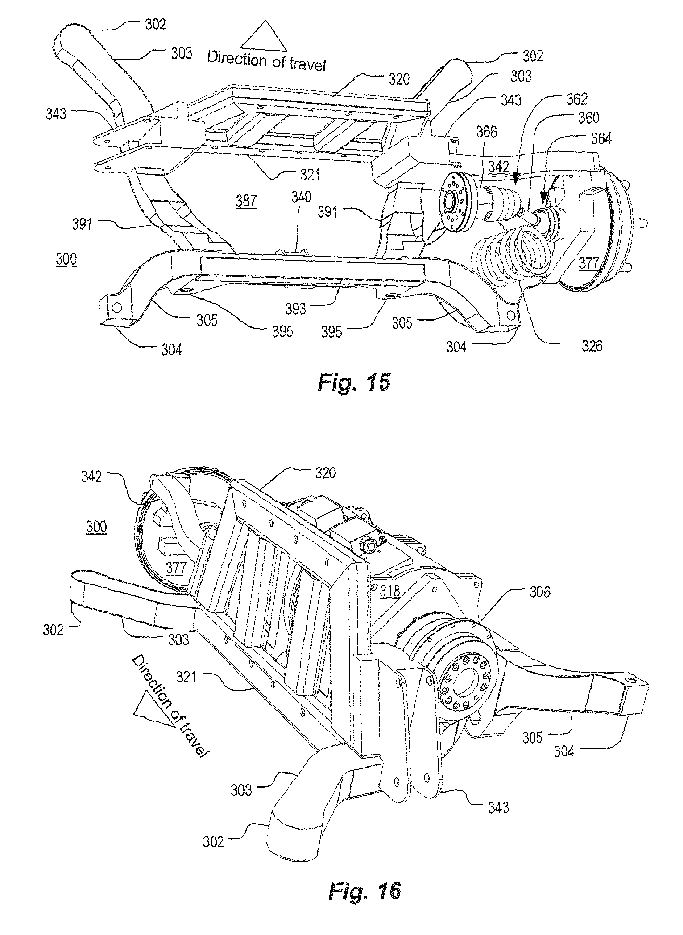

Referring now to Figs. 9-17 an embodiment of a sub-chassis, drive and control package can fit in the space normally occupied by a spare tire. The package is shown in various views with the direction of travel indicated in each drawing, which indicates a constant orientation for all views. The sub-chassis package 300 include motors, one for each of the left-rear (LR) and right-rear (RR) wheels with sensors such as encoders, temperature sensors, resolvers, electrical disconnects, and/or other kinds of sensors, end-effectors, controllers, or interface components; an electromagnetic coupling clutch that selectively connects the two motor drive outputs; a battery module; a controller, including power electronics, for the motors (one for each motor); a battery management controller; suspension for each wheel; output gearing and drive couplings to hubs; hubs (more generally, "wheel mounts"); a frame to support the drive mechanical components called a sub-chassis.

Controls and battery management may be configured as one or more separate packages and located remotely, close to, or integrated in, the sub-chassis. At a minimum, preferably, the sub-chassis package 300 includes items 1 (two motors and associated components), 2 (coupling), 6 (suspension), 7 (output drive), 8 (hubs) and 9 (sub-chassis).

A battery module 310 supplies power to the motors 318 of the sub-chassis package 300. Power modules 312 and 314 including power controllers, inverters, switches, and any other desired high-current components. Some parts of the power modules 312 and 314 may dissipate large amounts of heat. To handle the heat load, heat sinks 340 may be provided. In a preferred configuration, the heat sink or heat sinks 340 are positioned and oriented to take advantage of the flow of air around the vehicle. In the example shown in Fig. 10, the heat sink 340 vanes are oriented parallel to the vehicle direction of travel and project directly in a downward direction so that air passing around underneath the vehicle runs in a direction that is substantially parallel to the fins. The heat sink 340 fins are preferably aligned with the air flow pattern under peak load conditions taking account of vehicle type, including the suspended height when loaded, vehicle speed, and any other conditions affecting the load and air flow pattern.

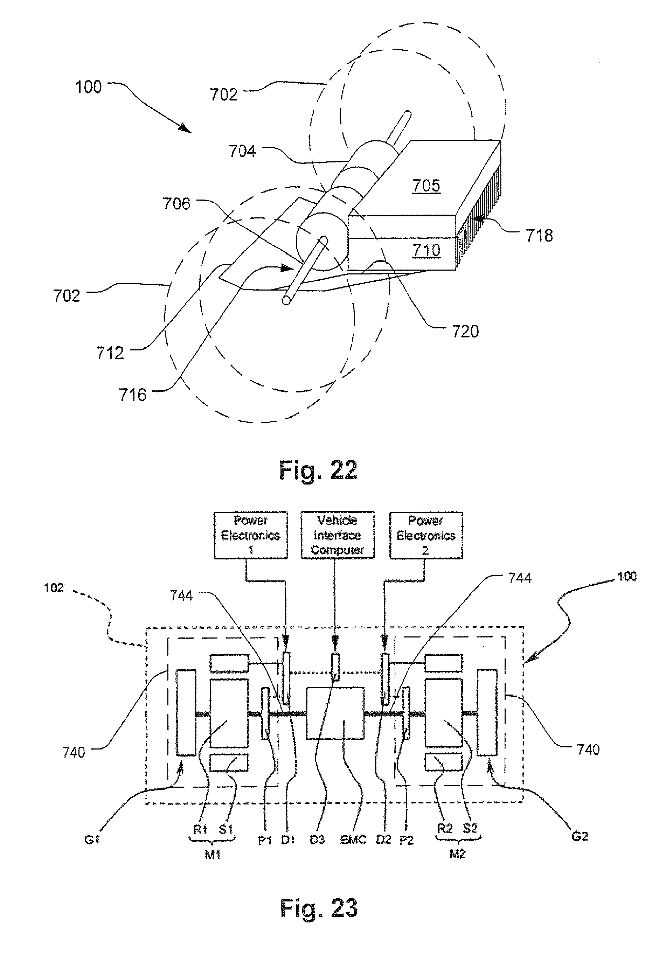

In an embodiment, the heat sink fins 710 (or other surface augmentation such as spines) may be protected by a skid plate 712, as shown in Fig. 22, which also defines an air duct 716 to 718 to scoop and guide air over the fins 710 during forward travel. As a result, heat dissipating components 705 such as power electronics, are cooled effectively. The skid plate 712 may have a vent opening and may be shaped to ram air, thereby taking advantage of dynamic pressure of air to force the air over the fins 710 of the heat sink(s) 340. The skid plate 712 may also serve its primary function of protecting the other components as well, such as motors 704 and drive components such as drive shafts 706 driving the wheels 702 of the modular propulsion module 100.

As best seen in Figs. 13 to 16, but continuing to refer to Figs. 9 to 17, which provide alternative views, the sub-chassis package 300 has a sub-chassis frame 301 that supports, notably, the motors 318, an interconnecting clutch between the motors 318, which is not visible in the drawings, and suspension and drive train components. In the illustrated embodiment, the motors 318 sit in a box-shaped portion 307 of the sub-chassis frame 387 bounded on the left and right sides by lateral supporting members 303. The box-shaped portion 307 of the sub-chassis frame 301 is bounded on the forward and trailing sides by a forward supporting member 321 and a trailing supporting member 393, respectively. The lateral supporting members 303 have hard-point mounts 302. The trailing supporting member 393 has extensions 305 with hard-point mounts 304 at their ends. The four hard-point mounts 302, 304 mount to respective parts of the vehicle where a conventional suspension would be attached allowing the sub-chassis package to be mounted and incorporated in a conventional vehicle with a minimum of modification.

As best seen in Figs. 9, 15, and 16, a structural member 320 is provided as a primary mounting for the motors 318. The structural member 320 extends upwardly from the forward supporting member 321. Preferably, the structural member 320 also provides a barrier between the heavy motors 318 and a fuel tank 308 to improve safety and crashworthiness. The motor 318 primary mountings are on the structural member 320, connecting the leading side of the motors 318, but the motors 318 are also attached to the trailing support member 393 at their trailing sides by a bracket 346. While the bracket provides additional support for the motors 318 to handle the large torque generated by them under peak demand and helps to reduce the moment applied to the structural member 320, other devices can be used to resolve torque generation of the motor 318 to the vehicle structure. Preferably, such devices distribute the torque load about the overall structure 303 to minimize movement resulting from torque loads. Noise and vibration isolation, such as rubber isolation, can be employed between the motors 318 and the overall structure 303.

In a preferred embodiment, the suspension 327 of which only the right side is shown, may be the same as used in the original vehicle design in which the vehicle is driven solely by the front internal combustion engine. At least it may be preferable to preserve the dynamics of the original suspension to avoid adversely affecting the vehicle handling. However, a revised, modified, or completely new suspension system can be included to replace the conventional suspension of a vehicle (but may include various components and overall structure to perform a similar function as the present embodiment). The suspension 327 includes various links 324, springs 326, control arms 342 (although one control arm 342 is shown, preferably two parallel control arms would ordinarily be provided) in an arrangement that should be readily understandable from the drawings and the foregoing characterization of the components.

A drive train includes a drive shaft 366 which is connected to a half-shaft 360 by an inboard constant-velocity (CV) joint 362. The drive shaft 366 is driven by an output side of a reduction gear 306 which is connected to the motor output shaft (not visible in the present set of drawings). The half-shaft 360 is connected through an outboard CV joint 364, which is connected to the hub 377. The drive train also includes the motors 318 and the clutch (not visible) which interconnects the motors 318. The operation and mechanical and electrical aspects of the motors 318 and clutch are as described above in the discussion referencing Figs. 1 through 5.

Fig. 23 shows an electric propulsion module in which hub motors are employed instead of inboard motors as in Fig. 1. Here, the schematic layout is identical to that of Fig. 1, except that the motors M1,M2; gear drive G1, G2; and position indicators P1, P2 are incorporated in respective hub motors 740. The hub motors 740 may have drive shafts 744 as with an inboard motor or motors, which connect to an electromagnetic clutch EMC. In this case, even though hub motors 740 are used, torque can be shared between them as in the embodiment of Fig. 1. Although not described in detail, a torque takeoff connectable to the drive shafts 744 may be provided by a suitably designed hub motor.

According to the above embodiment, the entire drive train and suspension can be fitted to an existing platform by simply mounting the modular structure of the sub-chassis package 300 to the points used, in the standard configuration, to mount only the suspension. The configuration of the suspension mounting points or hard points may vary from vehicle to vehicle but it is expected that the basic components of a structure which is self supporting and which provides mounting for the entire drive train and wheel suspensions, including electric motors, and gearing, can be provided in a wide variety of vehicles. In a particular preferred embodiment, the motors are independent and drive each of left and right wheels independently. In another preferred embodiment, the sub-chassis package also includes a clutch linking the two independent motors. In another preferred embodiment, the independent rotors and stators are commonly housed in a single casing and support. In this embodiment, preferably, the clutch is also commonly housed in the single casing. In a preferred variation of this embodiment, this commonly-housed-motors embodiment includes at least one of the additional elements discussed with reference to Fig. 5B.

As shown in the embodiments of the sub-chassis package 300 discussed above, the sub-chassis can be configured to provide a drop-in replacement for the rear wheel portion of a front wheel drive vehicle without requiring significant redesign. In a preferred configuration, the sub-chassis package 300 occupies the space normally occupied by the spare tire and/or by an existing mechanical AWD system and/or just the suspension components alone, thereby minimizing redesign or restructuring. The energy storage system and electronics take up the area normally taken up by the spare tire, which is typically formed as a well portion extending below a payload area and separated from the payload area by a removable panel. Modification of the body to provide room for the electric propulsion module 100 may be provided by modifying the payload boundaries to eliminate the well. For example, this may be done by designing a new body portion or by cutting the well away and installing an elevated floor to the payfoad-defining portion of the vehicle.

With the removal of the spare-tire well, the need for a spare tire can be avoided by the use of run-flat tires. Therefore, in an embodiment where the sub-chassis mounts to existing hard-points, is self-supporting and is substantially accommodated in the space otherwise required for the spare tire or the space between wheel wells but below the normal storage area of a trunk or cargo area. This embodiment preferably includes run-flat tires or the package of a spare tire in a location normally reserved for the driveshaft of a mechanical AWD system.

With the lateral space taken up by the sub-chassis, suspension arms off the suspension system may be restricted in length making the need for long suspension travel more difficult. This is because of the length of the twin motors 318 and other drive train elements. If the half-shaft 360 pivoting angles need to span a wide range to provide for high travel, the size of the twin motors 318 and other drive train elements may be reduced as discussed above. Hub motors may also be used as discussed below with reference to Fig. 22. In addition, or alternatively, plunge joints or ball spline shafts may be used as the half-shafts 360 to accommodate a wide sweep of the half-shafts 360.

As can be seen in the embodiments of Figs. 9-17, which are approximately to scale, the motors 318 and outboard gearing 306 occupy no more than approximately 60% of the distance between the outboard CV joints 364. In a preferred embodiment, the gear reduction 306 can be incorporated into the motors 318, reducing the overall width of the system. Output shafts 366 are made as short as possible to such that the distance between the inboard and outboard CV joints 362 and 364 is at least approximately 20% and preferably 25% of the distance between the left and right outboard CV joints 364.

To install the sub-chassis package 300, it would ordinarily be required to connect brake hydraulic lines, but in a brake-by-wire embodiment, the signals could be provided electrically or wirelessly or by other signal communications media.

Although in the sub-chassis package 300 embodiment, the structural support is provided by beam-like members, the main support could, in alternative embodiments, be provided by more closed sheet-metal structures such as a box with removable panels. Preferably, the structure is shaped to allow the motors or motor combination to be removed either through the trunk of the vehicle or dropped from below.

As discussed above, the control system may be provided with the capability to drive the electrically-powered wheels to add AWD functionality by installing the sub-chassis package 300, with suitable controls, into a conventional FWD vehicle. For example, this functionality may include electronic stability control. In this case, preferably, a steering position encoder is installed and connected to the controller to indicate the steering actions of the driver. The sub-chassis control system may be provided with an accelerometer to indicate the yaw acceleration of the vehicle. In such a context, a significant electronic stability control enhancement can be added to the vehicle in addition to the traction control, and performance enhancing features discussed. According to a preferred embodiment, the rear wheels assist in controlling the vehicle by changing the torque of the wheels based on the detected yaw (from the accelerometer) and the steering input. If the rate of change of yaw does not correspond to the changes in steering input, the controller calculates a differential torque to be applied to the motors 318 to perform a correction. The algorithms for this kind of stability control are known in conventional AWD. Therefore the details are not expansively discussed. In the proposed embodiment, control is applied to a subset of the wheels contained in the sub-chassis package 300. Differential torque is applied to the sub-chassis package wheels based on the error between the calculated intended yaw rate resulting from the driver steering input given vehicle speed and the measured yaw rate of the vehicle to automatically correct the vehicle rotation rate.

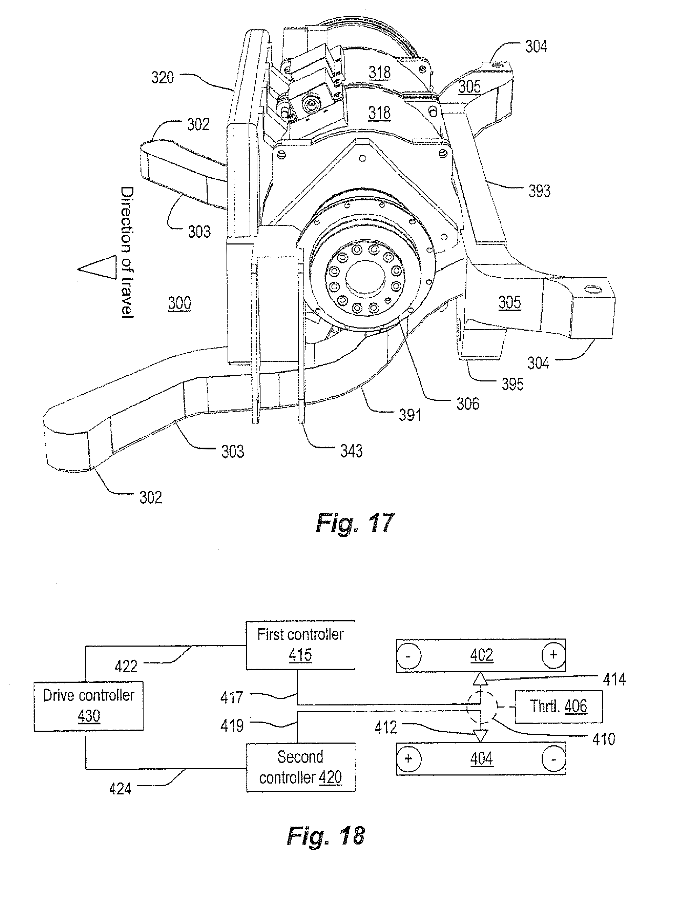

Referring to Fig. 18, to prevent unintended acceleration or vehicle launch, the throttle 406 is configured to generate a pair of opposite polarity signals from a wiper support 410 that is connected to two rheostats illustrated as wipers 412 and 414 contacting oppositely polarized resistors 402 and 404. As the throttle moves in one direction it generates both an increasing voltage signal and decreasing voltage signal from each of the resistors 402 and 404. As a result, if one or both signal paths 417 or 419 is compromised by a connection to a voltage or ground or by a change in the voltage drop in the signal path 417, 419, the other signal path 417, 419 can provide a competing electrical signal that can be used to identify the fault.

The signal path 417 is connected to apply its signal to a first controller 415 and the second signal path 419 is connected to apply its signal to a second controller 420. The first and second controllers can be any controllers including a battery management controller, a motor controller, a supervisory controller, a user interface controller, and/or other kinds of effectors, sensors, controllers, or transducer.

The first and second controllers 415 and 420 each generate an indication, responsively to the respective signal from the throttle, of an indicated acceleration request from the driver. The indication can be, for example, a digital magnitude indication representing a voltage on the signal path 417, 419. A drive controller 430 receives signals from the first and second controllers 415 and 420 and determines whether they agree within a predetermined tolerance. If they do, the drive controller 430 implements the commanded acceleration. If not, a variety of actions can be implemented, including generating an alarm signal, disabling the electric drive system, halting the internal combustion engine, applying the brakes, putting the vehicle in neutral, or any combination of the above.

Note that the supervisory function of the drive controller could be performed by either of the first controller 415 and the second controller 420. In such case, the drive controller may still be present, but it may receive only one signal. In addition, the first controller could take action on the inputted signals by monitoring the second controller's data over a multiplex bus, comparing the second controller's data to its own calculation and carrying out the command. A third module may be in the decision loop which may control the internal combustion engine that receives the command from the first controller if the throttle signals to the first controller matches the second controller information.

Referring to Fig. 19, a motor drive computer 520 implements a feed-forward control scheme, or algorithm, to add torque to smooth the acceleration of a vehicle during the shifting of a transmission, according to an algorithm. Further, the scheme can be used to decrease torque to ensure that the embodied system does not cause the engine to rotate at a higher speed than intended during a shift of an automatic transmission, or if a manual transmission is not shifted to the next higher gear.

Preferably, the algorithm is stored in the form of a data unit, such as a look-up table (LUT) 515, which can be provided and calibrated for either the vehicle type or the unique vehicle. The motor drive computer 520 corresponds to a digital controller that generates the waveform required to power the vehicle. During a shift, a vehicle's automatic or manual transmission will cause an instantaneous change in vehicle acceleration. By determining, in advance, the acceleration vs. time profile for various conditions or monitoring the vehicle multiplex network for a shift signal, the motor drive computer can adjust its output torque to cancel the undesirable component of the acceleration. The acceleration caused by shifting can be modeled as a simple addition, allowing an additional torque required to cancel it to be readily computed and added to a currently commanded torque derived from other control inputs and/or methods such as the throttle position, the electronic stability control algorithm.

The motor drive control computer 520 may receive an input from a battery manager 501. The algorithm may provide that additional cancellation torque not be applied at specified battery conditions. The motor drive control computer 520 may also receive an input from a speed indicator 503 since the unwanted acceleration may depend on a current speed. In this case, the required canceling acceleration may be empirically or theoretically derived and provided in the LUT 515 with entries corresponding to the different possible speeds or speed ranges. Of course, the required values can be refined by interpolation, generated using empirically-based formulas from constants in the look up table 515 or otherwise.

The motor drive control computer 520 may also receive an input from a throttle 505 whose position is likely to affect the required canceling acceleration generated by the motor drive control computer 520. Alternatively, or in addition, an indicator of engine demand such as engine torque, speed vs. intake manifold vacuum, or other indicators that are available over an in-vehicle multiplex bus may provide similar information into the composite algorithm.

Steering input 507 and vehicle acceleration 509 such as yaw acceleration and other attitude information can be applied to the algorithm. An example of how these inputs may be used by the algorithm is if conditions correspond to possible rear-wheel slip, say during hard steering under slippery conditions, the torque addition may be temporarily canceled to avoid potential control problems. The transmission status 511 may be conveyed to the algorithm since the required cancellation acceleration depends on which gear is engaged. And finally, a shift controller 513 may apply its status to the motor drive control computer 520 since the jarring of the transmission may depend on this setting. Also, the algorithm may be applicable to a manual transmission so the signal from a shift controller 513 may serve the essential function of indicating which gear is being engaged and when.

Although in the foregoing shift-smoothing embodiment, it was presumed that a control computer 520 would be used, it should be clear that many of the features discussed could be obtained using other types of digital or analog controllers.

Active stability control (often called electronic stability control) compares steering input and braking inputs asserted by a driver, to the vehicle's response. The vehicle's response is measured by sensors such as lateral acceleration sensors, rotation (yaw) acceleration sensors or encoders, and individual wheel speeds either borne from existing wheel speed sensors as part of an anti-lock brake system, for example, or as discussed above, obtained from another source such as from the motor position sensors which, when time-differentiated, provide motor speed, which is indicative of wheel speed. Wheel speeds of wheels other than the sub-chassis wheels can be obtained from a vehicle bus, which may be connected with the controller. The active stability control system of the sub-chassis may apply its own brakes or implement a negative (regenerative) torque signal at each wheel as needed to help correct understeer (plowing) or oversteer (fishtailing), In addition to active stability control, all-speed traction control may be provided by sensing drive-wheel slip under acceleration. Braking may be applied to the slipping wheel or wheels, and/or the motor power may be reduced. Further, if the controller invokes regenerative braking, to convert inertial energy into stored electrical energy" and thereby forces a wheel to a locked condition, the controller preferably provide an electric ABS function. The condition may be detected by comparing wheel slip to a calculated vehicle velocity, for example, or by the rate of change of wheel speed (or equivalent of wheel spin). The ABS function may be implemented by pulsing the brake and/or modulating the torque applied the electric motor driven wheels.

As discussed above, the embodiments described may provide the benefits of a hybrid and therefore, as can readily be seen, much of the technology relating to hybrids is also applicable to the instant drive system. In hybrid systems, the use of the electrical drive is under the control of a management system.
However, such systems may need to distinguish between city driving and highway driving, which may be inferred based on typical inputs available in a car. However, preferably, the driver user interface is provided with a switch to allow the drive to control when the vehicle is to be operated in an all-electric mode. The latter may be an alternative or a preferred way to command the system to operate in all-electric mode.

In an embodiment, a motive power device for vehicles has a chassis with attachment fixtures for connection to a vehicle. At least one electric motor is supported by the chassis such that torque generated by the motor is resisted by the chassis. The chassis transmits the torque to the vehicle through the attachment fixtures. For an example, the attachment fixtures may be hardpoints of the vehicle's main chassis or unibody or suspension mounts. The chassis has suspension portions movably connecting wheel mounts to the chassis. The suspension portions may replace some or all of suspension parts ordinarily associated with the vehicle, if the embodiment is an addition/replacement for an existing vehicle design that displaces the suspension as a result of occupying a portion of the vehicle where the original suspension was located. The wheel mounts are separated in a transverse dimension relative to the axis of movement of the vehicle (i.e., side to side of the vehicle). The chassis has mutually perpendicular vertical and longitudinal dimensions, each of which is perpendicular to the transverse dimension, each being no greater than a meter.

The above motive power device may, in an alternative embodiment, may be such that the suspension portions include a spring or more than one spring. Examples of springs include leaf springs, helical springs, air-suspension with air bladders acting as springs, elastomers, or any combination thereof. The above motive power device may, in an alternative embodiment, may be such that the chassis, at least one motor, suspension portions, and wheel mounts can be attached and disconnected as a self-supporting unit. The spring may be included as part of the self-supporting unit. Attachment of the chassis to the vehicle may be provided by lugs, for example four, six, or eight in number, that are ordinarily used for mounting the traditional suspension of the vehicle. Such lugs may be, for example, hinge portions.

In alternative embodiments, two electric motors are used, with each coupled to drive a respective wheel mount. The motor may be included in the self-supporting unit, with or without the spring and suspension portions. A motor battery may be connected to the chassis. Preferably, the motor battery has a capacity of at least 1 megajoule. At least one conductor and at least one switch may be provided connecting the motor or motors to the motor battery. The battery and associated components may be provided as part of the self-supporting unit in another alternative embodiment.

The chassis is preferably configured with an access opening to permit access to the motor or motors. In an embodiment, the chassis has a side with an access opening large enough to see and remove the motor or motors. The chassis may be a welded sheetmetal box, a truss frame, or a combination thereof. Alternatively, it may be a composite structure including, for example, fiberglass, carbon fiber, or any suitable structure. Preferably, the access opening or openings are located to provide access while chassis is mounted on the vehicle.

Preferably, the motor or motors are centered between the wheel mounts. In embodiments with two motors, each of the motors are connected to a respective one of the wheel mounts by an extendable shaft through which motive force is applied to the respective one of the wheel mounts. For example, the extendable shaft may be a ball-spline shaft. The shaft may be what is colloquially called a half-shaft, which is characterization of its size. This may be done to accommodate a larger chassis size with the associated components. The shaft and wheel mounts may be included in the self-supporting chassis.

A heat sink may be provided with an inverter and the motor battery. These may be connected to the chassis or mounted separately. Again, the battery capacity is at least 1 megajoule and at least one conductor and at least one switch connect the motor or motors to the motor battery. The inverter has a capacity of at least one kilowatt. The battery, inverter, at least one conductor, switch, at least one motor, suspension portions, and wheel mounts can be combined with the chassis to form a self-supporting unit.

A motor controller may be provided. The motor controller may have inputs configured to receive signals indicating wheel speeds or equivalents. The motor controller may be combined with other components on the chassis to form a self-supporting unit or may be integrated separately in the vehicle. The motor or motors has an output power transmission to drive the wheel mounts. The motor or motors have a respective motive power output for each wheel mount and the controller is configured to control output to each wheel mount responsively to the wheel speed inputs. Preferably two motors are used with each output being an output of a respective one of the two motors.

Embodiments in which a heat sink is included may also include heat exchange features, such as fins, spines, or other surface augmentation. The flow of air over the surface augmentation may be enhanced by arranging the heat sink in such a manner that air flowing under the vehicle is guided to move quickly over the heat exchanger. This may be done by arranging, for example, for the surface augmentation features to project into a channel through which air is rammed by forward movement of the vehicle. Alternatively, the surface augmentation features may project toward a region, such as the underside of the vehicle, where air naturally tends to move rapidly when the vehicle is in motion. In a particular embodiment or embodiments, the duct may be formed, in part, by a skid plate which defines the duct with one or more openings facing the direction of movement of the vehicle.

In another embodiment, a motive power module for a vehicle includes a self-supporting sub-chassis with attachment fixtures and supporting at least one motor. The support is such that moments caused by torque generated by the at least one motor are resisted by the sub-chassis and transferred to the attachment fixtures. Two wheel mounts are connected to be driven by the at least one motor. The attachment fixtures are configured to be attachable to the hardpoints normally used to attach suspension elements of two supplanted wheels to the frame of a vehicle. A controller is configured to control the at least one motor to provide at least one possible functions and preferably more. The at least one function includes at least launch assist to a vehicle with an engine other than the at least one motor. The other engine may power wheels of the vehicle other the two supplanted wheels.

The controller is preferably configured to control at least one motor to provide active stability control as well. The at least one motor may include two separate motors, each being connected to a respective one of the two wheel mounts. In that case, in the preferred configuration, the controller is configured to control both the motors to provide active stability control. Active stability control may be further or alternatively controlled through braking by means of brakes integrated in the system.

The controller may have wheel speed inputs and be configured to control at least one motor to provide active traction control responsively to signals applied to the wheel speed inputs. The speed inputs may be connected to the vehicle data bus to receive the signals indicating the speeds of the wheels other than the wheel attached to the wheel mounts of the motive power module.

The controller may have wheel speed inputs and be configured to control at least one motor to provide anti-lock braking responsively to signals applied to the wheel speed inputs. The speed inputs may be connected to the vehicle data bus to receive the signals indicating the speeds of the wheels other than the wheel attached to the wheel mounts of the motive power module.

The above embodiment may include a motor battery, wherein the at least one motor selectively functions as a generator to charge the battery. The module may include an inverter as well with both connected to the chassis. The motor battery may have a capacity of at least 1 megajoule and at least one conductor and at least one switch may be provided to connect the at least one motor to the motor battery. Preferably, the inverter has a capacity of at least one kilowatt. Preferably, the weight of the module is less than 100 kilograms.

In a variation of the disclosed embodiments, the sub-chassis may be connected to a legacy generator that is part of the original vehicle design of the mild hybrid system in order to have an external, efficient means of recharging the sub-chassis battery. In another alternative, the legacy generator may be upgraded to provide additional generating capacity for charging the larger battery of the electric propulsion module.

In another embodiment, a motive power device for a vehicle has two electric motors with a support configured to support the two electric motors near the center of a vehicle. A wheel mount and a drive shaft for each of the two electric motors provides for power from the motors to be applied to the respective wheels. A clutch connected between the two motors to share torque between the two motors. The support is configured to support the electric motors such that their axes are aligned in a transverse dimension of the vehicle. The clutch is capable of sustaining continuous slip. In an additional embodiment, the clutch is capable also of selectively locking.

A controller may be configured to receive accelerator signal from an accelerator and to control the motive output of the two electric motors and the clutch responsively to the accelerator signal. The controller may be configured such that for at least one accelerator signal, the clutch is locked. The controller may also, or alternatively, be configured to receive accelerator signal from an accelerator and to control the motive output of the two electric motors responsively to the accelerator signal. An accelerometer may apply an output to the controller and the controller may be configured to control the motive output of the two electric motors to provide active stability control responsively to the accelerometer signal. The two electric motors and clutch may be commonly housed with stators and rotors connected by a common housing with the clutch interconnecting the rotors.

The controller may be configured receive a wheel speed signal (or equivlalent) and to control the motive output of the two electric motors responsively to wheel speed signal. The controller may provide traction control, in particular, or anti-lock braking features, responsively to wheel speed (or equivalent) signal.

In another embodiment, a vehicle has a frame having at least four sets of hardpoints for mounting suspensions for at least four respective wheels. A sub-chassis has attachment fixtures connecting to two of the sets of hardpoints, thereby supplanting two of the at least four respective wheels. The two of the sets of hardpoints are separated in a direction perpendicular to a forward/backward axis of travel of the vehicle. At least one electric motor is supported by the sub-chassis such that torque generated by the motor is resisted by the chassis which transmits the torque to the two of the sets of hardpoints through the fixtures. Suspension portions are movably connecting wheel mounts to the sub-chassis. The sub-chassis, at least one electric motor, wheel mounts, and suspension portions may be detachable and reattachable as a self-supporting unit.

The suspension portions may include at least one spring. The at least one electric motor may include at least two electric motors, each coupled to drive a respective one of the wheel mounts. A motor battery may be connected to the sub-chassis. The motor battery may have a capacity of at leas 1 megajoule and at least one conductor and at least one switch connecting the at least one motor to the motor battery.

The sub-chassis may also include the motor battery as part of a detachable and reattachable self-supporting unit in combination with the sub-chassis. The sub-chassis may have an open side sized to permit the motor to be removed when the sub-chassis is mounted in a vehicle.

Attachment of the chassis to the vehicle may be provided by lugs, for example four, six, or eight in number, that are ordinarily used for mounting the traditional suspension of the vehicle. Such lugs may be, for example, hinge portions.

In alternative embodiments, two electric motors are used, with each coupled to drive a respective wheel mount. The motor may be included in the self-supporting unit, with or without the spring and suspension portions. A motor battery may be connected to the chassis. Preferably, the motor battery has a capacity of at least 1 megajoule. At least one conductor and at least one switch may be provided connecting the motor or motors to the motor battery. The battery and associated components may be provided as part of the self-supporting unit in another alternative embodiment.

The chassis is preferably configured with an access opening to permit access to the motor or motors. In an embodiment, the chassis has a side with an access opening large enough to see and remove the motor or motors. The chassis may be a welded sheetmetal box, a truss frame, or a combination thereof. Alternatively, it may be a composite structure including, for example, fiberglass, carbon fiber, or any suitable structure. Preferably, the access opening or openings are located to provide access while chassis is mounted on the vehicle.

Preferably, the motor or motors are centered between the wheel mounts. In embodiments with two motors, each of the motors are connected to a respective one of the wheel mounts by an extendable shaft through which motive force is applied to the respective one of the wheel mounts. For example, the extendable shaft may be a ball-spline shaft. The shaft may be what is colloquially called a half-shaft, which is characterization of its size. This may be done to accommodate a larger chassis size with the associated components. The shaft and wheel mounts may be included in the self-supporting chassis.

A heat sink may be provided with an inverter and the motor battery. These may be connected to the chassis or mounted separately. Again, the battery capacity is at least 1 megajoule and at least one conductor and at least one switch connect the motor or motors to the motor battery. The inverter has a capacity of at least one kilowatt. The battery, inverter, at least one conductor, switch, at least one motor, suspension portions, and wheel mounts can be combined with the chassis to form a self-supporting unit.

A motor controller may be provided. The motor controller may have inputs configured to receive signals indicating wheel speeds. The motor controller may be combined with other components on the chassis to form a self-supporting unit or may be integrated separately in the vehicle. The motor or motors has an output power transmission to drive the wheel mounts. The motor or motors have a respective motive power output for each wheel mount and the controller is configured to control output to each wheel mount responsively to the wheel speed inputs. Preferably two motors are used with each output being an output of a respective one of the two motors.

Embodiments in which a heat sink is included may also include heat exchange features, such as fins, spines, or other surface augmentation. The flow of air over the surface augmentation may be enhanced by arranging the heat sink in such a manner that air flowing under the vehicle is guided to move quickly over the heat exchanger. This may be done by arranging, for example, for the surface augmentation features to project into a channel through which air is rammed by forward movement of the vehicle. Alternatively, the surface augmentation features may project toward a region, such as the underside of the vehicle, where air naturally tends to move rapidly when the vehicle is in motion. In a particular embodiment or embodiments, the duct may be formed, in part, by a skid plate which defines the duct with one or more openings facing the direction of movement of the vehicle.

In another embodiment, a vehicle has a mild hybrid engine driving a first two wheels. The mild hybrid engine is configured to stop and start automatically such that fuel is not consumed during periods of low, or zero, operating demand on the mild hybrid engine. A frame and a sub-chassis are mounted to the frame. At least one electric motor is supported by the sub-chassis such that torque generated by the motor is resisted by the chassis which transmits the torque to the frame. A rechargeable battery is connected to power the at least one electric motor. A sub-chassis drive train is configured to permit the at least one electric motor to drive a second two wheels supported by the sub-chassis. A controller is configured to implement launch assist by controlling the at least one electric motor to provide at least 15% of a maximum total power of the mild hybrid engine during operation of the vehicle as well as regenerative braking and recharging of the batteries. The at least one electric motor may be two electric motors, each coupled to drive a respective one of the second two wheels. The battery preferably has a capacity of at least 1 megajoule. Preferably, the sub-chassis has an open side sized to permit the at least one motor to be removed when the sub-chassis is mounted in the vehicle. The sub-chassis may form a self-supporting unit that can be attached to hardpoints of the vehicle or removed from it, thereby allowing an existing vehicle design to be modified without significant "tear up." The sub-chassis may also include a suspension for supporting the second two wheels. A brake for each of the second two wheels may controlled by the controller to provide active stability control by controlling the brakes responsively to steering input and vehicle yaw detection.

The disclosed embodiments may provide electric rear wheel power to provide AWD functionality on roads during inclement weather, stability enhancement if it is detected that the vehicle is unstable, launch assist to improve acceleration performance, improved fuel economy in specific drive cycles, and other features which will be apparent in the disclosure of the embodiments.

While the following application assumes a FWD architecture with the system applied to the rear of said vehicle, it is clear to those skilled in the art that the system defined herein could also be applied to the front of an otherwise RWD vehicle configuration, or on the front or rear of an otherwise battery electric vehicle or series hybrid application.

As an example, the battery power storage capacity and other parameters may be sufficient to provide at least 15 consecutive full throttle launch assists with front wheels on a low-coefficient of friction surface (0.3 or below) follower by full braking to 0 mph with no power generation from an external source other than regenerative braking and without overheating or component damage.

According to another exemplary embodiment, the system components are selected to provide maximum power for all accelerations and for regenerative braking while driving the EPA City Cycle (See Fig. 21A) for five consecutive cycles with no power generation from an external source other than regenerative braking and without overheating or component damage. In Fig. 21A, the upper curve 27 indicates the acceleration and the lower curve 29 indicates the speed during a stop and go urban type driving scenario. In a variant of this embodiment, maximum power for all accelerations and for regenerative braking are provided while driving the EPA City Cycle (See Fig. 21A) for an unlimited number of cycles with power generation from the external source (the source other than the propulsion module; e.g., the internal combustion axle), of a maximum of 5kW.

in another variant, the embodiments provide regenerative braking to a level at least 75% of the total available system torque and, for example, be able to capture and store at least 30% of the available kinetic energy during braking from 60-0 mph. In yet another variant, the embodiments may provide a no-load top speed of 95 mph continuous.

Preferably, as discussed, the propulsion module is sized so that it fits within an available vehicle space with minimal vehicle modification and tear-up. The spare tire well space is a preferred location. Another possibility is to employ hub motors, optionally with drive shafts as discussed below with reference to Fig. 23. In an exemplary embodiment, the components are selected such that no more than 100 kg is added over the legacy vehicle (not including energy storage). Preferably, the added equipment is not visible from outside the vehicle without opening the hood or trunk, and the current ground clearance of approximately eight inches is maintained.

A method of use of the electric propulsion module may include several or more of the following steps (not necessarily in the following order). (1) A target vehicle is selected for modification by addition of the electric propulsion module. (2) A sub-chassis is selected or designed with fixtures that can attach with fixtures or features of the target vehicle's suspension hardpoints or attachment fixtures. The sub-chassis or target vehicle fixtures may include any suitable type such as one or more of bolts, lugs, hooks, pads (as for weld- or adhesive attachments), reinforced frame members, or any suitable fixtures or features. (3) The target vehicle is mechanically modified to accommodate the electric propulsion module when attached thereto. The modification may include removing, replacing, and/or modifying parts such as sheet metal structures, such as a spare tire well. Alternatively, parts of the vehicle may be designed to accommodate the electric propulsion module so that no modification is necessary. (4) A propulsion module controller is connected to interface to the target vehicle's sensors and/or controllers such as by connecting the propulsion module controller to the target vehicle's data bus. As a result of the attachment, the propulsion module controller receives signals indicating the status of the target vehicle which may include signals such as wheel speeds, engine status; steering, throttle, transmission, and other drive controllable inputs, and any other information required for the propulsion module to provide the features described herein.

According to an embodiment, a user control is provided to allow the selection of a level of launch assist. The user control provides a stored value which may be used to define an upper bound on the peak power output of the propulsion module. Alternatively, or in addition, a control may be provided to allow the user to select a proportionality constant which discounts the power output by the propulsion module.

According to an embodiment, an entire drive train and suspension is fitted to an existing platform by simply mounting the modular structure of a sub-chassis package to the body or chassis portions used, in the standard configuration, to mount only the suspension. The configuration of the suspension mounting points or hard points may vary from vehicle to vehicle but it is expected that the components of a structure which is self supporting and which provides mounting for the entire drive train and wheel suspensions, including electric motors, and gearing, can be provided in a wide variety of vehicles. In a particular preferred embodiment, the motors are independent and drive each of left and right wheels independently. In another preferred embodiment, the sub-chassis package also includes a clutch linking the two independent motors. In another preferred embodiment, the independent rotors and stators are commonly housed in a single casing and support. In this embodiment, preferably, the clutch is also commonly housed in the single casing. In a preferred variation of this embodiment, this commonly-housed-motors embodiment includes additional elements of a position sensor such as an encoder and a resolver.

According to another embodiment, a motive power device for a vehicle having a direction of travel is connectable to the vehicle to act as a drive component. The motive power device has two electric motors with a support configured to support the two electric motors each motor being configured to drive a respective wheel mount. The wheel mounts are separated such that they are on opposite sides of the vehicle when the motive power device is mounted thereon. A clutch is connected between the two motors to transmit torque between them. In a variation of this embodiment, the clutch is configured to sustain continuous slip. Preferably, the clutch is further configured to sustain continuous slip and also capable of locking.

In another embodiment, a controller is provided and configured to receive a signal responsive to an acceleration command. The controller controls the motive output of the two electric motors and the clutch responsively to the signal.
The controller is preferably configured such that for at least one state of the signal, the clutch is locked. In a particular embodiment, the controller is configured such that when the signal indicates an acceleration higher than a threshold level, the clutch is locked by the controller. Alternatively, or in addition, in another embodiment, the controller is configured to receive accelerator signal from an accelerator and to control the motive output of the two electric motors responsively to the accelerator signal. According to a feature of the foregoing embodiments, an accelerometer with an accelerometer signal output applied to the controller. The controller is configured to control the motive output of the two electric motors to provide active stability control responsively to the accelerometer signal. Preferably, the controller is configured receive a signal responsive to wheel speed and to control the clutch responsively to the signal. Also, preferably, the controller is configured receive a signal responsive to wheel speed and to control the clutch and motors responsively to the signal.

In a particular embodiment, which is a variation of the foregoing, the two electric motors and clutch are commonly housed with stators and rotors connected by a common housing and with the clutch interconnecting the rotors.

According to an embodiment, an electromagnetic clutch has first and second rotors urged toward or away from each other by a biasing member. The first and second rotors have interacting elements that cause a varying amount torque coupling between them as an axial distance between them is changed. A stator has a primary winding and the first rotor has a secondary winding that magnetically couples with a field generated by the primary winding. An electromagnet with a magnetic circuit first part is attached to the first rotor. A magnetic circuit second part is attached to the second rotor and arranged such that when the electromagnet is excited by a current, the first and second rotors are forced against the biasing member causing the first and second rotors to move toward each other or away from each other. The electromagnet is connected to the secondary winding to be excited by a current from the secondary winding.

According to a feature of the clutch, the first and second rotors collectively form a magnetic eddy current brake such that as the axial distance between them is changed, the amount of torque coupling between them is varied. Preferably, the first and second rotors have inter-engaging members that lock together when the axial distance between the first and second rotors reaches a predefined distance.

According to another embodiment of a clutch, an electromagnetic clutch has first and second torque-coupling elements in which the torque-coupling is activated electromagnetically by generating a current in a clutch activation winding. According to the embodiment, one of the torque-coupling elements carries a secondary winding which is excited by a primary winding that is magnetically coupled with the primary winding. The secondary winding provides the current in the clutch activation winding such that when the primary winding is excited, the clutch is activated thereby causing torque-coupling to be activated.

According to another embodiment, an acceleration controller has a user activated input member connected to first and second progressive input devices generating first and second progressive signals, respectively, the first and second signals being of opposite polarity. An acceleration command generator is responsive to the first and second signals and configured to generate an acceleration command signal only when the first and second signals have signal levels that have a predefined relationship. Preferably, the input member includes an accelerator control of a vehicle. The input devices may include rheostats, for example, in which case, the rheostats may have oppositely electrically polarized resistors and wipers contacting the resistors. An alarm signal generator may be provided in the acceleration controller. The alarm comprising an alarm signal generator is preferably responsive to the first and second signals and generates an alarm if the signals fall outside the predefined relationship. In all embodiments, the acceleration command is preferably a progressive signal.

The disclosed embodiments may provide solutions to the shortcomings of known vehicle architectures. Those of ordinary skill in the art will readily appreciate, however, that these and other details, features and advantages will become further apparent in view of the aforementioned description and the attached drawings, schematic illustrations and appendices.
Aspects of the subject matter disclosed and discussed in the above may be defined by the following numbered clauses:
1. A motive power device for vehicles, comprising:
   a chassis with first attachment fixtures for connection to second attachment fixtures used for attaching a suspension to a target vehicle;
   at least one electric motor supported by the chassis such that torque generated by the motor is resisted by the chassis which transmits the torque to the vehicle through the fixtures;
   suspension portions movably connecting two wheel mounts to the chassis, the wheel mounts being separated in a transverse dimension.
2. The device of clause 1, wherein the suspension portions include at least one spring.
3. The device of clause 2, wherein the chassis, at least one motor, suspension portions, at least one spring, and wheel mounts can be attached and disconnected as a self-supporting unit by disconnecting the first and second attachment fixtures by disconnecting the first and second attachment fixtures.
4. The device of clause 1, wherein the chassis, at least one motor, suspension portions, and wheel mounts can be attached and disconnected as a self-supporting unit by disconnecting the first and second attachment fixtures.
5. The device of clause 1, wherein the at least one electric motor includes at least two electric motors, each coupled to drive a respective wheel mount.
6. The device of clause 5, wherein the chassis, motors, suspension portions, and wheel mounts can be attached and disconnected as a self-supporting unit by disconnecting the first and second attachment fixtures.
7. The device of clause 1 , further comprising a motor battery connected to the chassis with a capacity of at least 1 megajoule and at least one conductor and at least one switch connecting the at least one motor to the motor battery.
8. The device of clause 7, wherein the chassis, the motor battery, suspension portions, and wheel mounts can be attached and disconnected as a self-supporting unit by disconnecting the first and second attachment fixtures.
9. The device of clause 1, wherein the chassis has an open side sized to permit the motor to be removed when the chassis is mounted in a vehicle.
10. The device of clause 9, wherein the chassis, at least one motor, suspension portions, and wheel mounts can be attached and disconnected as a self- supporting unit by disconnecting the first and second attachment fixtures.
11. The device of clause 1, wherein the chassis the attachment fixtures are configured for attachment to lugs and number four or fewer.
12. The device of clause 11, wherein the chassis, at least one motor, suspension portions, and wheel mounts can be attached and disconnected as a self- supporting unit by disconnecting the first and second attachment fixtures.
13. The device of clause 1, wherein the chassis has portions forming a truss.
14. The device of clause 1, wherein the at least one electric motor includes at least two electric motors, each coupled to drive a respective wheel mount, the motors being centered between the wheel mounts, each being connected to a respective one of the wheel mounts by an extendable shaft through which motive force is applied to the respective one of the wheel mounts.
15. The device of clause 14, wherein the chassis, motors, suspension portions, extendable shaft, and wheel mounts can be attached and disconnected as a self- supporting unit by disconnecting the first and second attachment fixtures.
16. The device of clause 1, further comprising an inverter and a motor battery, both connected to the chassis, the battery having a capacity of at least 1 megajoule and at least one conductor and at least one switch connecting the at least one motor to the motor battery, the inverter having a capacity of at least one kilowatt.
17. The device of clause 16, wherein the chassis, battery, inverter, at least one motor, suspension portions, and wheel mounts can be attached and disconnected as a self-supporting unit by disconnecting the first and second attachment fixtures.
18. The device of clause 1, further comprising a heat sink, an inverter, and a motor battery, each being connected to the chassis; the battery having a capacity of at least 1 megajoule and at least one conductor and at least one switch connecting the at least one motor to the motor battery, the inverter having a capacity of at least one kilowatt.
19. The device of clause 18, wherein the chassis, battery, inverter, at least one conductor, switch, at least one motor, suspension portions, and wheel mounts can be attached and disconnected as a self-supporting unit by disconnecting the first and second attachment fixtures.
20. The device of clause 1, further comprising a motor controller and inputs configured to receive signals indicating wheel speeds; an output power transmission to drive the wheel mounts; wherein the at least one motor has a respective motive power output for each wheel mount and the controller is configured to control output to each wheel mount responsively to the wheel speed inputs.
21. The device of clause 1, further comprising a brake for each wheel mount and a controller with inputs for receiving signals indicating vehicle yaw and steering input signals, the controller being configured to control the brakes to provide active stability control responsively to the yaw and steering input signals.
22. The device of clause 20, wherein the at least one motor is two motors, each of the respective motive power outputs being an output of a respective one of the two motors.
23. The device of clause 22, wherein the chassis, motor controller, battery, inverter, at least one conductor, switch, motors, suspension portions, and wheel mounts can be attached and disconnected as a self-supporting unit by disconnecting the first and second attachment fixtures.
24. The device of clause 1, further comprising a heat sink with heat exchange features and a skid plate that forms a duct which is open in the longitudinal direction to define an air channel, the heat exchange surfaces projecting into the air channel.
25. A motive power module for a vehicle, comprising: a self-supporting sub-chassis with attachment fixtures and supporting at least one motor such that moments caused by torque generated by the at least one motor are resisted by the sub-chassis and transferred to the attachment fixtures; two wheel mounts connected to be driven by the at least one motor; the attachment fixtures being configured to be attachable to suspension supports of a vehicle; and a controller configured to control the at least one motor to provide at least launch assist to a vehicle drive including an internal combustion engine.
26. The module of clause 25, wherein the controller is configured to control the at least one motor to provide active stability control.
27. The module of clause 25, wherein the at least one motor includes two motors, each being connected to a respective one of the two wheel mounts.
28. The module of clause 27, wherein the controller is configured to control the motors to provide active stability control.
29. The module of clause 25, wherein the controller has wheel speed inputs and is configured to control the at least one motor to provide active traction control responsively to signals applied to the wheel speed inputs.
30. The module of clause 25, further comprising a battery, wherein the at least one motor selectively functions as a generator to charge the battery.
31. The module of clause 25, further comprising an inverter and a motor battery, both connected to the chassis, the motor battery having a capacity of at least 1 megajoule and at least one conductor and at least one switch connecting the at least one motor to the motor battery, the inverter having a capacity of at least one kilowatt.
32. The module of clause 31, wherein the weight of the module is less than 100 kilograms.
33. A motive power device for a vehicle, comprising: two electric motors with a support configured to support the two electric motors inboard of a vehicle; a wheel mount and a drive shaft for each of the two electric motors, each drive shaft being connected between a respective one of the two motors and a respective one of the two wheel mounts to rotate the wheel mount; a clutch connected between the two motors to drive torque between them.
34. The device of clause 33, wherein the support is configured to support the electric motors such that their axes are aligned in a transverse dimension of the vehicle.
35. The device of clause 33, wherein the clutch is capable of sustaining continuous slip.
36. The device of clause 33, wherein the clutch is capable of sustaining continuous slip and also capable of locking.
37. The device of clause 33, further comprising a controller, the controller being configured to receive accelerator signal from an accelerator and to control the motive output of the two electric motors and the clutch responsively to the accelerator signal.
38. The device of clause 37, wherein the controller is configured such that for at least one accelerator signal, the clutch is locked.
39. The device of clause 33, further comprising a controller, the controller being configured to receive accelerator signal from an accelerator and to control the motive output of the two electric motors responsively to the accelerator signal.
40. The device of clause 33, further comprising an accelerometer with an accelerometer signal output applied to the controller, the controller being configured to control the motive output of the two electric motors to provide active stability control responsively to the accelerometer signal.
41. The device of clause 33, wherein the controller is configured receive a wheel speed signal and to control the motive output of the two electric motors responsively to wheel speed signal.
42. The device of clause 33, wherein the controller is configured receive a wheel speed signal and to control the motive output of the two electric motors, to provide traction control, responsively to wheel speed signal.
43. The device of clause 33, wherein the two electric motors and clutch are commonly housed with stators and rotors connected by a common housing with the clutch interconnecting the rotors.
44. A vehicle, comprising: a frame having at least four sets of hardpoints for mounting suspensions for at least four respective wheels; a sub-chassis with attachment fixtures connecting to two of the sets of hardpoints, the two of the sets of hardpoints being separated in a direction perpendicular to a forward/backward axis of travel of the vehicle; at least one electric motor supported by the sub-chassis such that torque generated by the motor is resisted by the chassis which transmits the torque to the two of the sets of hardpoints through the fixtures; suspension portions movably connecting wheel mounts to the sub-chassis; the sub-chassis, at least one electric motor, wheel mounts, and suspension portions being detachable and reattachable as a self-supporting unit.
45. The vehicle of clause 44, wherein the suspension portions include at least one spring.
46. The vehicle of clause 44, wherein the at least one electric motor includes at least two electric motors, each coupled to drive a respective one of the wheel mounts.
47. The vehicle of clause 44, further comprising a motor battery connected to the sub-chassis with a capacity of at least 1 megajoule and at least one conductor and at least one switch connecting the at least one motor to the motor battery; the sub-chassis also including the motor battery as part of the detachable and reattachable self-supporting unit.
48. The vehicle of clause 44, wherein the sub-chassis has an open side sized to permit the motor to be removed when the sub-chassis is mounted in a vehicle.
49. The vehicle of clause 44, wherein the sub-chassis attachment fixtures are configured for attachment to lugs and number four or fewer.
50. The vehicle of clause 44, wherein the sub-chassis has portions forming a truss.
51. The vehicle of clause 44, wherein the at least one electric motor includes at least two electric motors, each coupled to drive a respective wheel mount, the motors being centered between the wheel mounts, each being connected to a respective one of the wheel mounts by an extendable shaft through which motive force is applied to the respective one of the wheel mounts; the sub-chassis also including the extendable shafts as part of the detachable and reattachable self- supporting unit.
52. The vehicle of clause 44, further comprising an inverter and a motor battery, both connected to the sub-chassis, the battery having a capacity of at least 1 megajoule and at least one conductor and at least one switch connecting the at least one motor to the motor battery, the inverter having a capacity of at least one kilowatt; the sub-chassis also including the motor battery and inverter as part of the detachable and reattachable self-supporting unit.
53. The vehicle of clause 44, further comprising a heat sink, an inverter, and a motor battery, each being connected to the sub-chassis; the battery having a capacity of at least 1 megajoule and at least one conductor and at least one switch connecting the at least one motor to the motor battery, the inverter having a capacity of at least one kilowatt; the sub-chassis also including the motor battery, heat sink, and inverter as part of the detachable and reattachable self-supporting unit.
54. The vehicle of clause 44, further comprising a motor controller and inputs configured to receive signals indicating wheel speeds; an output power transmission to drive the wheel mounts; wherein the at least one motor has a respective motive power output for each wheel mount and the controller is configured to control output to each wheel mount responsively to the wheel speed inputs; the sub-chassis also including the controller as part of the detachable and reattachable self-supporting unit.
55. The vehicle of clause 44, further comprising a motor controller and inputs configured to receive signals indicating wheel speeds; an output power transmission to drive the wheel mounts; wherein the at least one motor has a respective motive power output for each wheel mount and the controller is configured to control output to each wheel mount responsively to the wheel speed inputs
56. The vehicle of clause 55, wherein the at least one motor is two motors, each of the respective motive power outputs being an output of a respective one of the two motors.
57. The vehicle of clause 44, further comprising a heat sink with heat exchange features and a skid plate that forms a duct which is open in the longitudinal direction to define an air channel, the heat exchange surfaces projecting into the air channel.
58. A vehicle, comprising: an engine drive with a fuel-driven engine driving a first two wheels, the engine drive being configured to stop and start the fuel-driven engine automatically such that fuel is not consumed during periods of low, or zero, operating demand on the mild hybrid engine; a frame and a sub-chassis mounted to the frame; at least one electric motor supported by the sub-chassis such that torque generated by the at least one electric motor is resisted by the chassis which transmits the torque to the frame; a rechargeable battery connected to power the at least one electric motor; a sub-chassis drive train configured to permit the at least one electric motor to drive a second two wheels supported by the sub-chassis; a controller configured to implement launch assist by controlling the at least one electric motor to provide at least 15% of a maximum total power of the engine drive during operation of the vehicle as well as regenerative braking and recharging of the batteries.
59. The vehicle of clause 58, wherein the at least one electric motor includes at least two electric motors, each coupled to drive a respective one of the second two wheels.
60. The vehicle of clause 58, wherein the battery has a capacity of at least 1 megajoule.
61. The vehicle of clause 58, wherein the sub-chassis has an open side sized to permit the at least one motor to be removed when the sub-chassis is mounted in the vehicle.
62. The vehicle of clause 58, wherein the sub-chassis is a self-supporting unit.
63. The vehicle of clause 58, wherein the sub-chassis is a self-supporting unit that includes a suspension for supporting the second two wheels.
64. The vehicle of clause 58, further comprising a brake for each of the second two wheels and wherein the controller is further configured to provide active stability control by controlling the brakes responsively to steering input and vehicle yaw detection.
65. A method of making a vehicle, comprising: configuring a sub-chassis having electric drive components to be attachable to suspension-attachment features of an existing vehicle design, the existing vehicle design including an internal combustion drive train driving two wheels and ordinarily having two non-driven wheels coinciding with the suspension-attachment features; mounting the sub-chassis to the suspension-attachment features to form a completed vehicle.
66. The method of clause 65, wherein the mounting includes configuring the vehicle to accommodate the sub-chassis.
67. The method of clause 65, wherein the electric drive components include an electric motor.
68. The method of clause 65, wherein the electric drive components include two electric motors, each connected to drive a wheel.
69. The method of clause 65, further comprising modifying the vehicle design to accommodate the sub-chassis.
70. A motive power device for a vehicle having a direction of travel, the motive power device being connectable to the vehicle to act as a drive component, comprising: two electric motors with a support configured to support the two electric motors each configured to drive a respective wheel mount; the wheel mounts being separated such that they are on opposite sides of the vehicle when the motive power device is mounted thereon; a clutch connected between the two motors to transmit torque between them.
71. The device of clause 70, wherein the clutch is configured to sustain continuous slip.
72. The device of clause 70, wherein the clutch is configured to sustain continuous slip and also capable of locking.
73. The device of clause 70, further comprising a controller, the controller being configured to receive a signal responsive to an acceleration command and to control the motive output of the two electric motors and the clutch responsively to the signal.
74. The device of clause 73, wherein the controller is configured such that for at least one state of the signal, the clutch is locked.
75. The device of clause 73, wherein the controller is configured such that when the signal indicates an acceleration higher than a threshold level, the clutch is locked by the controller.
76. The device of clause 70, further comprising a controller, the controller being configured to receive accelerator signal from an accelerator and to control the motive output of the two electric motors responsively to the accelerator signal.
77. The device of clause 70, further comprising a controller and an accelerometer with an accelerometer signal output applied to the controller, the controller being configured to control the motive output of the two electric motors to provide active stability control responsively to the accelerometer signal.
78. The device of clause 70, further comprising a controller, wherein the controller is configured receive a signal responsive to wheel speed and to control the clutch responsively to the signal.
79. The device of clause 70, further comprising a controller, wherein the controller is configured receive a signal responsive to wheel speed and to control the clutch and motors responsively to the signal.
80. The device of clause 70, wherein the two electric motors and clutch are commonly housed with stators and rotors connected by a common housing and with the clutch interconnecting the rotors.
81. An electromagnetic clutch, comprising: first and second rotors urged toward or away from each other by a biasing member; the first and second rotors having interacting elements that cause a varying amount torque coupling between them as an axial distance between them is changed; a stator having a primary winding, the first rotor having a secondary winding that magnetically couples with a field generated by the primary winding; an electromagnet having a magnetic circuit first part which is attached to the first rotor, a magnetic circuit second part being attached to the second rotor and arranged such that when the electromagnet is excited by a current, the first and second rotors are forced against the biasing member causing the first and second rotors to move toward each other or away from each other; the electromagnet being connected to the secondary winding to be excited by a current from the secondary winding.
82. The clutch of clause 81 , wherein the first and second rotors collectively form a magnetic eddy current brake such that as the axial distance between them is changed, the amount of torque coupling between them is varied.
83. The clutch of clause 81 , wherein the first and second rotors have inter-engaging members that lock together when the axial distance between the first and second rotors reaches a predefined distance.
84. A clutch, comprising: an electromagnetically activated clutch mechanism with first and second rotating elements in which torque-coupling between the first and second rotating elements is activated electromagnetically by generating a current in a clutch activation winding; a stator element with a primary winding; the first rotating element carrying a secondary winding magnetically coupled with the primary winding such that the secondary winding is excited by the primary winding when an excitation current is generated therein; the secondary winding being connected to generate a current in the clutch activation winding such that when the primary winding is excited, the clutch mechanism is activated thereby causing torque-coupling between the first and second rotating elements.
85. An acceleration controller, comprising: a user activated input member connected to first and second progressive input devices generating first and second progressive signals, respectively, the first and second signals being of opposite polarity; an acceleration command generator responsive to the first and second signals and configured to generate an acceleration command signal only when the first and second signals have signal levels that have a predefined relationship.
86. The controller of clause 85, wherein the input member includes an accelerator control of a vehicle.
87. The controller of clause 85, wherein the input devices include rheostats.
88. The controller of clause 85, wherein the input devices include rheostats with oppositely electrically polarized resistors and wipers contacting the resistors.
89. The controller of clause 85, further comprising an alarm signal generator responsive to the first and second signals which generates an alarm if the signals fall outside the predefined relationship.
90. The controller of clause 85, wherein the acceleration command is a progressive signal.
While the present invention has been disclosed with reference to certain embodiments, numerous modifications, alterations, and changes to the described embodiments are possible without departing from the sphere and scope of the present invention, as defined in the appended claims. Accordingly, it is intended that the present invention not be limited to the described embodiments, but that it has the full scope defined by the language of the following claims, and equivalents thereof.

## Claims

1. A motive power device for a vehicle, comprising:
two electric motors (318) with a support configured to support the two electric motors inboard of a vehicle;
a wheel mount (377) and a drive shaft for each of the two electric motors, each drive shaft being connected between a respective one of the two motors (318) and a respective one of the two wheel mounts (377) to rotate the wheel mount; and
a clutch (EMC) connected between the two motors (318) to drive torque between them.

2. A motive power device for a vehicle having a direction of travel, the motive power device being connectable to the vehicle to act as a drive component, comprising:
two electric motors (318) with a support configured to support the two electric motors each configured to drive a respective wheel mount (377);
the wheel mounts (377) being separated such that they are on opposite sides of the vehicle when the motive power device is mounted thereon; and
a clutch (EMC) connected between the two motors to transmit torque between them.

3. The device of claim 1, wherein the support is configured to support the electric motors such that their axes are aligned in a transverse dimension of the vehicle.

4. The device of claim 1 or 2, wherein the clutch is capable of sustaining continuous slip.

5. The device of claim 1 or 2, wherein the clutch is capable of sustaining continuous slip and also capable of locking.

6. The device of claim 1 or 2, further comprising a controller, the controller being configured to receive accelerator signal from an accelerator and to control the motive output of the two electric motors and the clutch responsively to the accelerator signal.

7. The device of claim 6, wherein the controller is configured such that for at least one accelerator signal, the clutch is locked.

8. The device of claim 7, wherein the controller is configured such that when the signal indicates an acceleration higher than a threshold level, the clutch is locked by the controller.

9. The device of claim 1 or 2, further comprising a controller, the controller being configured to receive an accelerator signal from an accelerator and to control the motive output of the two electric motors responsively to the accelerator signal.

10. The device of claim 1 or 2, further comprising a controller and an accelerometer with an accelerometer signal output applied to the controller, the controller being configured to control the motive output of the two electric motors to provide active stability control responsively to the accelerometer signal.

11. The device of claim 1, wherein the controller is configured to receive a wheel speed signal and to control the motive output of the two electric motors responsively to wheel speed signal.

12. The device of claim 1, wherein the controller is configured to receive a wheel speed signal and to control the motive output of the two electric motors, to provide traction control, responsively to wheel speed signal.

13. The device of claim 2, further comprising a controller, wherein the controller is configured to receive a signal responsive to wheel speed and to control the clutch responsively to the signal.

14. The device of claim 2, further comprising a controller, wherein the controller is configured to receive a signal responsive to wheel speed and to control the clutch and motors responsively to the signal.

15. The device of claim 1 or 2, wherein the two electric motors and clutch are commonly housed with stators and rotors connected by a common housing with the clutch interconnecting the rotors.

16. The device of claim 1, further comprising:
a chassis (301) with attachment fixtures (302, 304) for connection to the vehicle;
said two electric motors (318) being supported by the chassis (301) such that torque generated by the motors (318) is resisted by the chassis (301) which transmits the torque to the vehicle through the fixtures (302, 304); and
each wheel mount (377) being movably connected to the chassis (301) by means of suspension portions, the wheel mounts being separated in a transverse direction.
